Europäisches Patentamt
European Patent Office
Office européen des brevets

(19)

(11) Veröffentlichungsnummer: **0 624 630 A1**

(12) **EUROPÄISCHE PATENTANMELDUNG**

(21) Anmeldenummer: **94106831.4**

(51) Int. Cl.5: **C09B 62/507**, C09B 62/08

(22) Anmeldetag: **02.05.94**

(30) Priorität: **13.05.93 DE 4316001**
**05.06.93 DE 4318755**

(43) Veröffentlichungstag der Anmeldung:
**17.11.94 Patentblatt 94/46**

(84) Benannte Vertragsstaaten:
**CH DE GB LI**

(71) Anmelder: **HOECHST AKTIENGESELLSCHAFT**
**Brüningstrasse 50**
**D-65929 Frankfurt am Main (DE)**

(72) Erfinder: **Reiher, Uwe, Dr.**
**Sachsenring 8**
**D-65719 Hofheim am Taunus (DE)**
Erfinder: **Dannheim, Jörg, Dr.**
**Strubbergstrasse 32**
**D-60489 Frankfurt am Main (DE)**
Erfinder: **Russ, Werner Hubert, Dr.**
**Wingertstrasse 8a**
**D-65439 Flörsheim am Main (DE)**

(54) **Wasserlösliche faserreakfive Farbstoffe, Verfahren zu ihrer Herstellung und ihre Verwendung.**

(57) Es werden Azofarbstoffe der allgemeinen Formeln

$D^1 - N = N - (E - N = N)_v - K^2 - Z$ (1a)

$Z - D^2 - N = N - (E - N = N)_v - K^1$ (1b)

$Z - D^2 - N = N - (E - N = N)_v - K^2 - Z$ (1c)

$D^1 - N = N - K^o - N = N - D^2 - Z$ (1d)

$Z - D^2 - N = N - K^o - N = N - D^2 - Z$ (1e)

beschrieben, in welchen Z eine Gruppe der allgemeinen Formel (2)

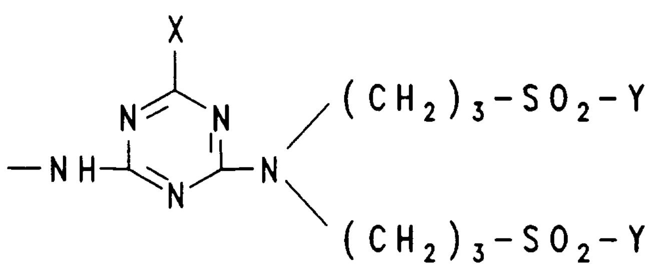

(2)

ist, worin X gleich Chlor oder Fluor ist und die Gruppen $-SO_2-Y$ einen faserreaktiven Rest der Vinylsulfonreihe bedeuten, v für die Zahl Null oder 1 steht, $D^1$ und $D^2$ Reste von in faserreaktiven Farbstoffen üblichen Diazokomponenten und $K^1$ und $K^2$ Reste von in faserreaktiven Farbstoffen üblichen Kupplungskomponenten sind.
Mit diesen Azofarbstoffen lassen sich hydroxy- und/oder carbonamidgruppenhaltige Materialien, insbesondere

EP 0 624 630 A1

Fasermaterialien, wie Wolle, Seide, synthetisches Polyamid und insbesondere Celluloserfasermaterialien, wie Baumwolle, in echten farbstarken Tönen färben.

Die Erfindung liegt auf dem technischen Gebiet der faserreaktiven Farbstoffe.

Die Praxis des Färbens mit faserreaktiven Farbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen faserreaktiven Farbstoffen, die verbesserte Eigenschaften, nicht nur in Bezug auf die Echtheiten, sondern auch einen hohen Fixiergrad auf dem zu färbenden Material aufweisen. So sind aus den europäischen Patentanmeldungs-Veröffentlichungen Nrs. 0 070 806, 0 070 808 und 0 374 758, der britischen Patentschrift Nr. 1 576 237 und den US-Patentschriften Nrs. 4 908 436 und 5 138 041 faserreaktive Azofarbstoffe bekannt, die einen Monohalogen-s-triazinylamino-Rest enthalten, der mittels der Aminogruppe und einem aliphatischen Brückenglied mit einer oder zwei faserreaktiven Gruppe(n) der Vinylsulfonreihe verbunden ist. Diese bekannten Farbstoffe sind wegen der angesprochenen gestiegenen Anforderungen insbesondere hinsichtlich ihres Fixiergrades und der Farbstärke der mit ihnen erhältlichen Färbungen und Drucke verbesserungswürdig.

Mit der vorliegenden Erfindung wurden nunmehr neue faserreaktive Mono-, Dis- und Trisazofarbstoffe der allgemeinen Formeln (1a), (1b), (1c), (1d) und (1e)

$D^1 - N = N - (E - N = N)_v - K^2 - Z$ (1a)

$Z - D^2 - N = N - (E - N = N)_v - K^1$ (1b)

$Z - D^2 - N = N - (E - N = N)_v - K^2 - Z$ (1c)

$D^1 - N = N - K^o - N = N - D^2 - Z$ (1d)

$Z - D^2 - N = N - K^o - N = N - D^2 - Z$ (1e)

gefunden, in welchen bedeuten:

Z ist eine Gruppe der allgemeinen Formel (2)

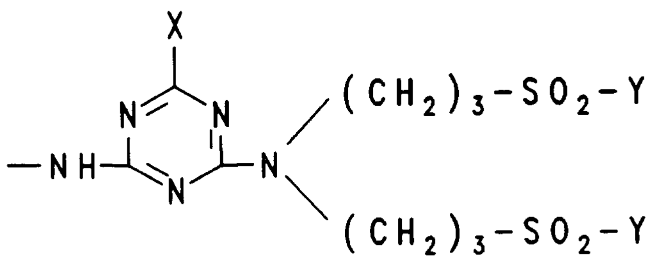

(2)

in welcher

X Chlor oder Fluor ist und

Y Vinyl ist oder Ethyl bedeutet, das in β-Stellung durch einen unter Einwirkung von Alkali bei Bildung der Vinylgruppe eliminierbaren Substituenten substituiert ist;

$D^1$ ist ein Rest der nachstehend angegebenen und definierten allgemeinen Formel (3a) oder (3b);

$Z\text{-}D^2\text{-}$ ist ein Rest der nachstehend angegeben und definierten allgemeinen Formel (4a) oder (4b);

E ist ein Rest der nachstehend angegeben und definierten allgemeinen Formel (5a), (5b) oder (5c);

v ist die Zahl Null oder 1;

$K^1$ ist eine Gruppe der nachstehend angegebenen und definierten allgemeinen Formel (6a), (6b), (6c), (6d), (6e), (6f), (6g) oder (6h);

$\text{-}K^2\text{-}Z$ ist eine Gruppe der nachstehend angegebenen und definierten allgemeinen Formel (7a), (7b), (7c), (7d), (7e), (7f), (7g), (7h) oder (7i);

$K^o$ ist der Rest einer bivalenten Kupplungskomponente, wie der bivalente Rest des gegebenenfalls durch bei Farbstoffen übliche Substituenten substituierten Resorcins, 1,8-Dihydroxy-naphthalins oder 1-Amino-8-hydroxy-naphthalins;

ausgenommen hiervon Farbstoffe der allgemeinen Formel (1a), in welcher gleichzeitig X gleich Chlor, v die Zahl Null, $D^1$ ein Rest der Formel (3b), und der Rest $\text{-}K^2\text{-}Z$ gleich ein Rest der allgemeinen Formel (7c) ist, sowie Farbstoffe der allgemeinen Formel (1b), in welcher gleichzeitig v die Zahl Null, $Z\text{-}D^2\text{-}$ ein Rest der allgemeinen Formel (4a) und $K^1$ ein Rest der allgemeinen Formel (6d) mit $R^H$ gleich Wasserstoff oder Sulfo

sowie $P^1$, $P^2$, T und $P^9$ der angegebenen Bedeutungen ist.

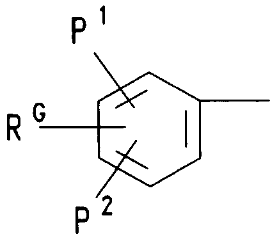

(3a)

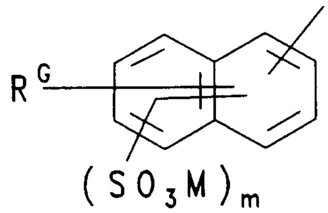

(3b)

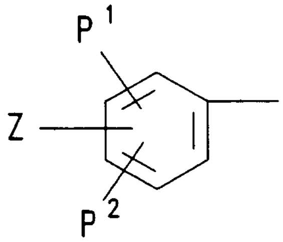

(4a)

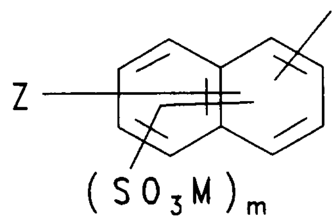

(4b)

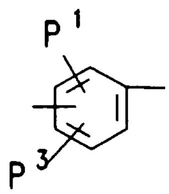

(5a)

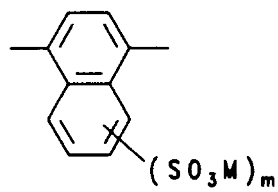

(5b)

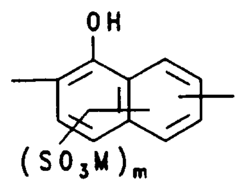

(5c)

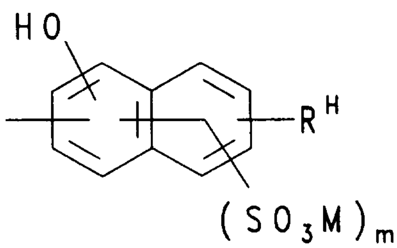

(6a)

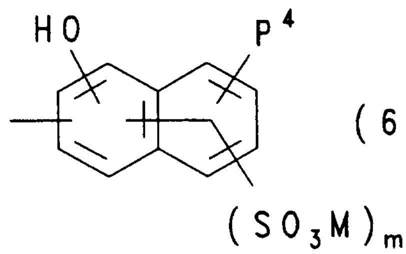

(6b)

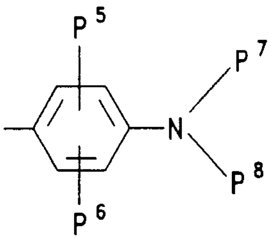

(6c)

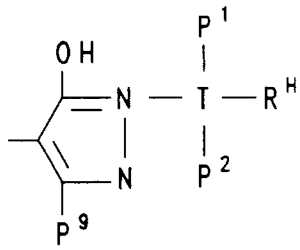

(6d)

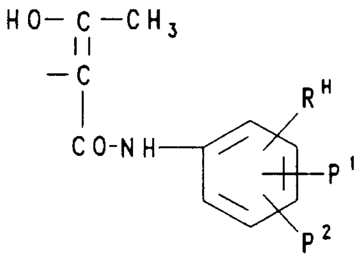

(6e)

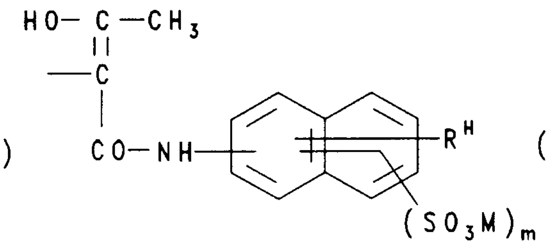

(6f)

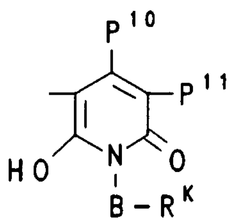

(6g)

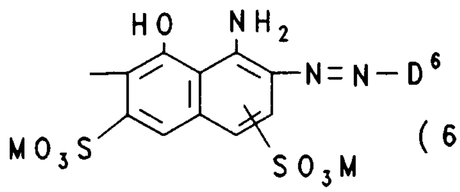

(6h)

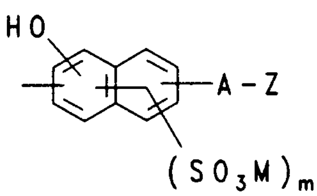

(7a)

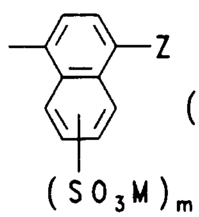

(7b)

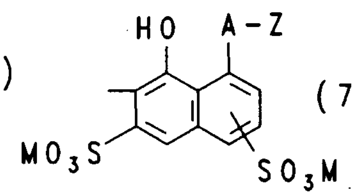

(7c)

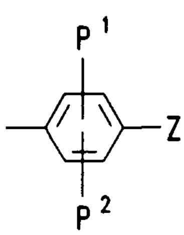

(7d)

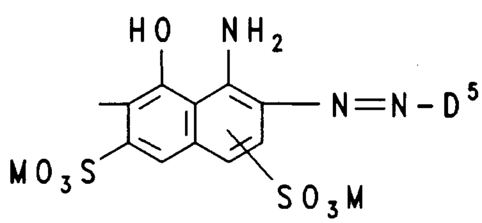

(7e)

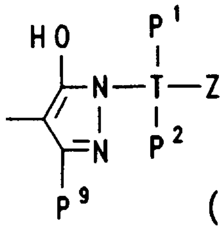

(7f)

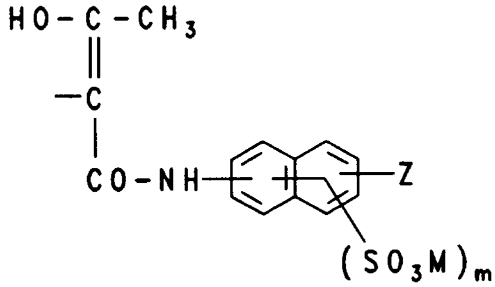

(7g)

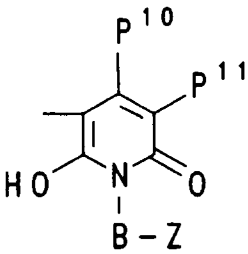

(7h)

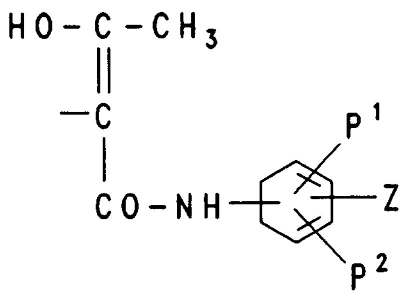

(7i)

In diesen Formeln bedeuten:

- M ist Wasserstoff oder ein Alkalimetall, wie Natrium, Kalium oder Lithium;
- $R^G$ ist Wasserstoff oder Sulfo oder eine Gruppe der allgemeinen Formel $D^1$-N = N- , in welcher $D^1$ ein Rest der oben angegebenen allgemeinen Formel (3a) oder (3b) ist, worin $P^1$ und $P^2$ eine der nachstehend angegebenen Bedeutungen besitzen und $R^G$ hier Wasserstoff oder Sulfo bedeutet;
- $P^1$ ist Wasserstoff, Methyl, Ethyl, Methoxy, Ethoxy, Alkanoyl von 2 bis 5 C-Atomen, wie Acetyl und Propionyl, Cyano, Sulfo, Carboxy, Nitro, Phenylamino, Phenoxy, Sulfophenylamino, Alkoxycarbonyl von 2 bis 5 C-Atomen, wie Methoxycarbonyl und Ethoxycarbonyl, Sulfamoyl, Carbamoyl, N-($C_1$-$C_4$-Alkyl)-carbamoyl, Fluor, Chlor, Brom oder Trifluormethyl;
- $P^2$ ist Wasserstoff, Methyl, Ethyl, Methoxy, Ethoxy, Cyano, Carboxy, Sulfo, Chlor, Alkanoylamino von 2 bis 5 C-Atomen, wie Acetylamino, Alkoxycarbonyl von 2 bis 5 C-Atomen, wie Methoxycarbonyl und Ethoxycarbonyl, Carbamoyl, N-($C_1$-$C_4$-Alkyl)-sulfamoyl, N-Sulfophenylamidocarbonyl, N-Phenyl-amidocarbonyl, Alkylsulfonyl von 1 bis 4 C-Atomen, Phenylsulfonyl oder Phenoxy;
- m steht für die Zahl Null, 1 oder 2 (wobei diese Gruppe im Falle von m gleich Null ein Wasserstoffatom bedeutet);
- $P^3$ ist Wasserstoff, Alkyl von 1 bis 4 C-Atomen, wie Methyl oder Ethyl, Alkoxy von 1 bis 4 C-Atomen, wie Methoxy und Ethoxy, Chlor, Amino, Alkanoylamino von 2 bis 5 C-Atomen, wie Acetylamino und Propionylamino, Benzoylamino, Ureido, Phenylureido, Alkylureido mit 1 bis 4 C-Atomen im Alkylrest, Phenylsulfonyl oder Alkylsulfonyl von 1 bis 4 C-Atomen;
- $R^H$ ist Wasserstoff oder Sulfo oder eine Gruppe der allgemeinen Formel -N = N-$K^1$ , in welcher $K^1$ eine Gruppe der oben angegebenen allgemeinen Formel (6c), (6d), (6e) oder (6h) ist, in welchen $R^H$ hier für Wasserstoff oder Sulfo steht und die anderen Formelglieder eine der nachstehenden oder obengenannten Bedeutungen besitzen;
- $R^K$ ist Wasserstoff, Sulfo oder Carboxy;
- $P^4$ ist Phenylureido, das im Phenylrest durch Substituenten aus der Gruppe Chlor, Methyl, Methoxy, Sulfo und Carboxy substituiert sein kann, oder ist Alkanoylamino von 2 bis 5 C-Atomen, wie Acetylamino oder Propionylamino, oder ist Benzoylamino, das im Benzolrest durch Substituenten aus der Gruppe Chlor, Methyl, Methoxy, Nitro, Sulfo und Carboxy substituiert sein kann;
- $P^5$ ist Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino;
- $P^6$ ist Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylami-

no, Ureido oder Phenylureido;

$P^7$ ist Wasserstofff oder Alkyl von 1 bis 4 C-Atomen, das durch Hydroxy, Cyano, Carboxy, Sulfo, Sulfato, Methoxycarbonyl, Ethoxycarbonyl oder Acetoxy substituiert sein kann;

$P^8$ ist Alkyl von 1 bis 4 C-Atomen, das durch Hydroxy, Cyano, Carboxy, Sulfo, Sulfato, Methoxycarbonyl, Ethoxycarbonyl oder Acetoxy substituiert sein kann, oder ist Benzyl oder Phenyl oder durch Alkyl von 1 bis 4 C-Atomen, Alkoxy von 1 bis 4 C-Atomen, Chlor und/oder Sulfo substituiertes Phenyl;

$P^9$ ist Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl, bevorzugt Methyl, Carboxy, Methoxycarbonyl, Ethoxycarbonyl oder Phenyl und insbesondere Methyl oder Carboxy;

T steht für einen Benzol- oder Naphthalinring, bevorzugt Benzolring;

$P^{10}$ ist Wasserstoff oder Alkyl von 1 bis 4 C-Atomen, wie Methyl, oder durch Alkoxy von 1 bis 4 C-Atomen, wie Methoxy, oder Cyano substituiertes Alkyl von 1 bis 4 C-Atomen oder ist Phenyl, bevorzugt Alkyl von 1 bis 4 C-Atomen oder Phenyl;

$P^{11}$ ist Wasserstoff, Chlor, Brom, Sulfo, Carbamoyl, Methylsulfonyl, Phenylsulfonyl, Cyano oder Sulfoalkyl von 1 bis 4 C-Atomen, bevorzugt Wasserstoff, Sulfo, Sulfoalkyl mit einem Alkylrest von 1 bis 4 C-Atomen, wie Sulfomethyl, Cyano oder Carbamoyl;

A ist eine kovalente Bindung oder ein Rest der Formel -NH-CO-phenylen- oder -NH-CO-NH-phenylen- oder -NH-phenylen- ;

B ist Alkylen von 1 bis 4 C-Atomen, das durch Hydroxy, Sulfato, Sulfo, Carboxy, Phosphato oder Acetyloxy substituiert sein kann, oder ist Methylenphenylen, Ethylenphenylen, Phenylenmethylen, Phenylenethylen oder Phenylen oder im Benzolrest durch Fluor, Chlor, Brom, Methyl, Methoxy, Cyano, Sulfo, Carboxy, Acetyl, Nitro, Carbamoyl und/oder Sulfamoyl substituiertes Methylenphenylen, Ethylenphenylen oder Phenylen;

$D^5$ ist eine Gruppe der oben genannten und definierten allgemeinen Formel (4a) oder (4b);

$D^6$ ist ein Rest der oben angegebenen allgemeinen Formel (3a) oder (3b), in welchen $P^1$ und $P^2$ eine der obengenannten Bedeutungen besitzen und $R^G$ hier Wasserstoff oder Sulfo bedeutet;

in den Formeln (6a), (6b) und (7a) steht die freie Bindung, die zur Azogruppe führt, in ortho-Stellung zur Hydroxygruppe an den aromatischen Kern gebunden, und in den Formeln (6a) und (6f) steht $R^H$, falls $R^H$ eine Gruppe $-N=N-K^1$ bedeutet, sowie in der Formel (7a) der Rest -A-Z in β-Stellung des jeweiligen anderen aromatischen Kerns des Naphthalinrestes gebunden;

in Formel (5c) steht die freie Bindung, die zum Rest $-N=N-K^1$ oder $-N=N-K^2-Z$ führt, in 2- oder 3-Stellung an den 8-Hydroxy-naphthyl-Rest gebunden;

in Formel (7b) steht die eine Gruppe $-SO_3M$ in meta- oder para-Stellung zur Gruppe -A-Z gebunden.

Bevorzugt ist hiervon $P^1$ gleich Wasserstoff, Methyl, Methoxy, Brom, Chlor, Sulfo und Carboxy sowie $P^2$ gleich Wasserstoff, Methyl, Methoxy, Chlor, Carboxy, Sulfo und Acetylamino.

Alkalisch eliminierbare Substituenten, die in β-Stellung der Ethylgruppe von Y stehen, sind beispielsweise Halogenatome, wie Brom und Chlor, Estergruppen organischer Carbon- und Sulfonsäuren, wie von Alkylcarbonsäuren, gegebenenfalls substituierter Benzolcarbonsäuren und gegebenenfalls substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino. Bevorzugt ist Y β-Sulfatoethyl oder Vinyl und insbesondere bevorzugt β-Chlorethyl.

Von den Azofarbstoffen der allgemeinen Formeln (1d) und (1e) sind insbesondere die Azofarbstoffe der allgemeinen Formel (1f)

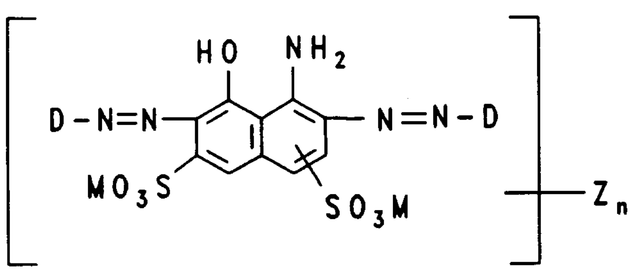

(1 f)

hervorzuheben, in welcher

M und n die obengenannten Bedeutungen haben,

Z für einen Rest der allgemeinen Formel (2) steht, der im Falle von n gleich 1 an einem der Reste D steht und im Falle von n gleich 2 an beide D gebunden ist, und

D jedes die Bedeutung von $D^1$ oder $D^2$ hat in Abhängigkeit davon, ob an D der Rest Z gebunden ist.

In den obengenannten allgemeinen Formeln und ebenso in den nachfolgenden allgemeinen Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Die Gruppen "Sulfo", "Carboxy", "Thiosulfato", "Phosphato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM, Thiosulfatogruppen Gruppen entsprechend der allgemeinen Formel $-S-SO_3M$ , Phosphatogruppen Gruppen entsprechend der allgemeinen Formel $-OPO_3M_2$ und Sulfatogruppen Gruppen entsprechend der allgemeinen Formel $-OSO_3M$ , in welchen M die obengenannte Bedeutung besitzt.

Gruppen der allgemeinen Formeln (3a) und (3b) sind beispielsweise:

Phenyl, 2-Methyl-phenyl, 3- und 4-Methyl-phenyl, 2-Methoxy-phenyl, 3- und 4-Methoxy-phenyl, 2-Chlorphenyl, 3- und 4-Chlor-phenyl, 2,5-Dichlor-phenyl, 2,5-Dimethyl-phenyl, 2-Methoxy-5-methyl-phenyl, 2-Methoxy-4-nitro-phenyl, 4-Phenyl-phen-1-yl, 3-Phenoxy-phenyl, 2-Sulfamoyl-phenyl, 3- und 4-Sulfamoylphenyl, 2-, 3- und 4-(N-Methyl-sulfamoyl)-, -(N-Ethyl-sulfamoyl)-, -(N,N-Dimethyl-sulfamoyl)- und -(N,N-Diethyl-sulfamoyl)-phenyl, 2-Sulfo-5-trifluormethyl-phenyl, 3-Nitro-phenyl, 4-Nitro-phenyl, 3-Acetylaminophenyl, 4-Acetylamino-phenyl, 2-Carboxy-phenyl, 4-Carboxy-phenyl, 3-Carboxy-phenyl, 3-Chlor-6-carboxyphenyl, 2-Sulfo-phenyl, 3-Sulfo-phenyl, 4-Sulfo-phenyl, 2,5-Disulfo-phenyl, 2,4-Disulfo-phenyl, 3,5-Disulfophenyl, 2-Methyl-5-sulfo-phenyl, 2-Methoxy-5-sulfo-phenyl, 2-Methoxy-4-sulfo-phenyl, 2-Sulfo-5-methyl-phenyl, 2-Methyl-4-sulfo-phenyl, 3-Sulfo-4-methoxy-phenyl, 5-Sulfo-2-ethoxy-phenyl, 4-Sulfo-2-ethoxy-phenyl, 2-Carboxy-5-sulfo-phenyl, 2-Carboxy-4-sulfo-phenyl, 2,5-Dimethoxy-4-sulfo-phenyl, 2,4-Dimethoxy-5-sulfophenyl, 2-Methoxy-5-methyl-4-sulfo-phenyl, 2-Sulfo-4-methoxy-phenyl, 2-Sulfo-4-methyl-phenyl, 2-Methyl-4-sulfo-phenyl, 2-Chlor-4-sulfo-phenyl, 2-Chlor-5-sulfo-phenyl, 2-Brom-4-sulfo-phenyl, 2,6-Dichlor-4-sulfo-phenyl, 2-Sulfo-4- und -5-chlor-phenyl, 2-Sulfo-4,5-dichlor-phenyl, 2,5-Dichlor-6-sulfo-phenyl, 2,5-Dichlor-4-sulfo-phenyl, 2-Sulfo-5-chlor-4-methyl-phenyl, 2-Sulfo-4-chlor-5-methyl-phenyl, 2-Sulfo-5-methoxy-phenyl, 2-Methoxy-5-sulfo-phenyl, 2-Methoxy-4-sulfo-phenyl, 2,4-Dimethoxy-6-sulfo-phenyl, 2-Sulfo-5-acetylamino-4-methyl-phenyl, 2-Methyl-4,6-disulfo-phenyl, 2,5-Disulfo-4-methoxy-phenyl, 2-Sulfo-5-nitro-phenyl, 2-Sulfo-4-nitro-phenyl, 2,6-Dimethyl-3-sulfo-phenyl, 2,6-Dimethyl-4-sulfo-phenyl, 3-Acetylamino-6-sulfo-phenyl, 4-Acetylamino-2-sulfo-phenyl, 4-Sulfo-naphth-1-yl, 3-Sulfo-naphth-1-yl, 5-Sulfo-naphth-1-yl, 6-Sulfo-naphth-1-yl, 7-Sulfo-naphth-1-yl, 8-Sulfo-naphth-1-yl, 3,6-Disulfo- und 5,7-Disulfonaphth-1-yl, 3,7-Disulfo-naphth-1-yl, 3,6,8-Trisulfo-naphth-1-yl, 4,6,8-Trisulfo-naphth-1-yl, 5-Sulfo-naphth-2-yl, 6- oder 8-Sulfo-naphth-2-yl, 3,6,8-Trisulfo-naphth-2-yl, 1,5,7-Trisulfo-naphth-2-yl, 1,7-Disulfo-naphth-2-yl, 5,7-Disulfo-naphth-2-yl, 2,5,7-Trisulfonaphth-1-yl, 4,6,8-Trisulfo-naphth-2-yl, 6,8-Disulfo-naphth-2-yl, 1,6-Disulfo-naphth-2-yl, 1-Sulfo-naphth-2-yl, 1,5-Disulfo-naphth-2-yl, 3,6-Disulfo-naphth-2-yl, 4,8-Disulfo-naphth-2-yl.

Gruppen entsprechend dem allgemeinen Formelrest $D^1$-N=N-E- sind beispielsweise 4-(4'-Sulfo-phenyl)-azo-2-sulfo-phenyl, 4-(2',4'-Disulfo-phenyl)-azo-2-methoxy-5-methyl-phenyl 4-(2',5'-Disulfo-phenyl)-azo-2-methyl-5-methoxy-phenyl, 4-(3',6',8'-Trisulfo-naphth-2'-yl)-azo-3-ureido-phenyl, 4-(4',8'-Disulfo-naphth-2'-yl)-azo-3-acetylamino-phenyl, 7-(1',5'-Disulfo-naphth-2'-yl)-azo-6-sulfo-8-hydroxy-naphth-3-yl und 4-(4'-Sulfophenyl)-azo-6-sulfo-naphth-1-yl.

Von den Azofarbstoffen sind insbesondere bevorzugt solche, die den allgemeinen Formeln (12A) bis (12S)

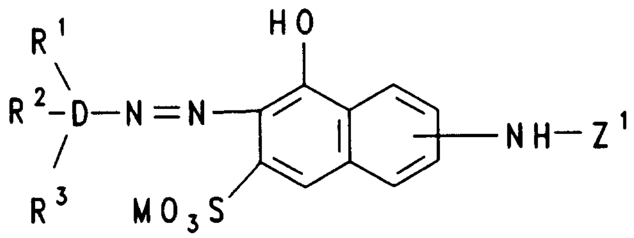

(12A)

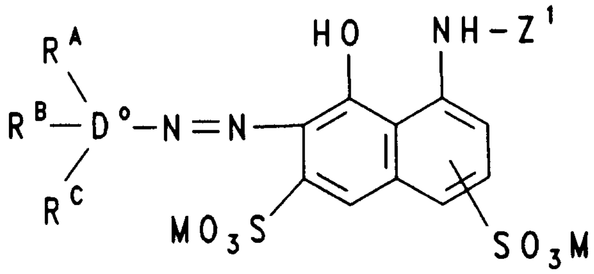

(12B)

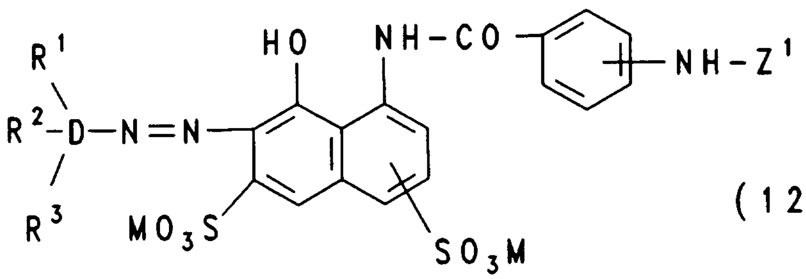

(12C)

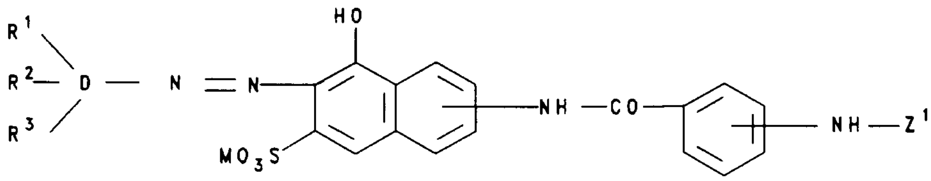

(12D)

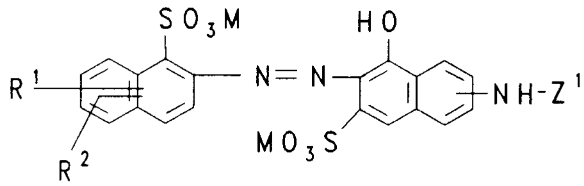

(12E)

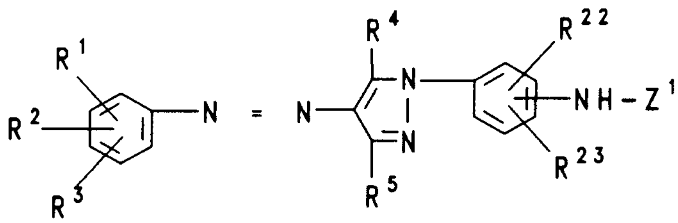

(12F)

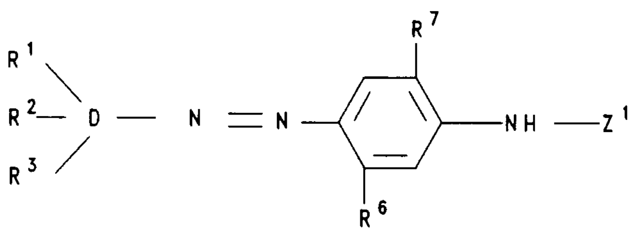

(12G)

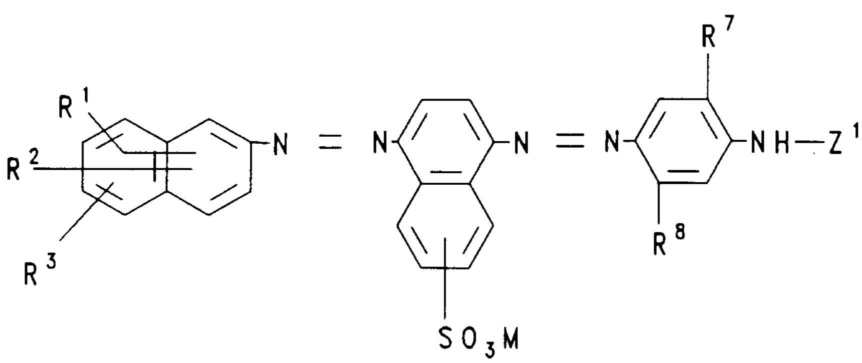

(12H)

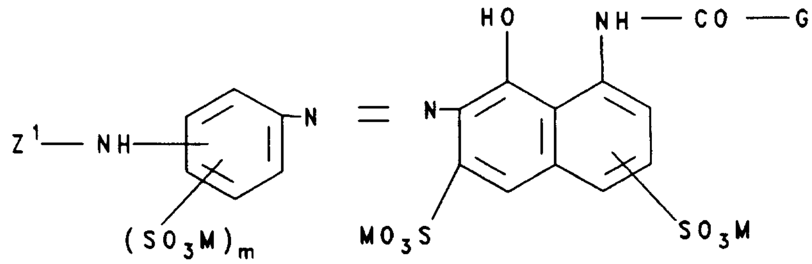

(12J)

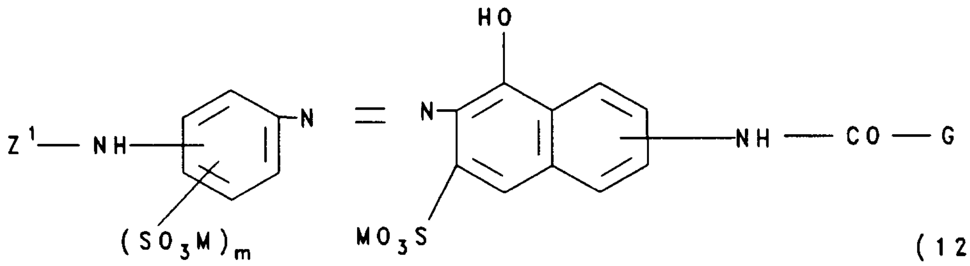

(12K)

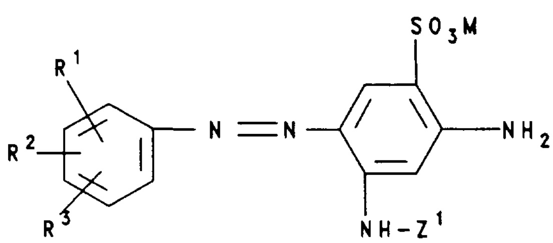

(12L)

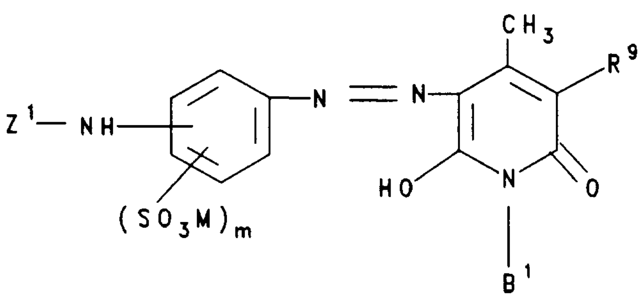

(12M)

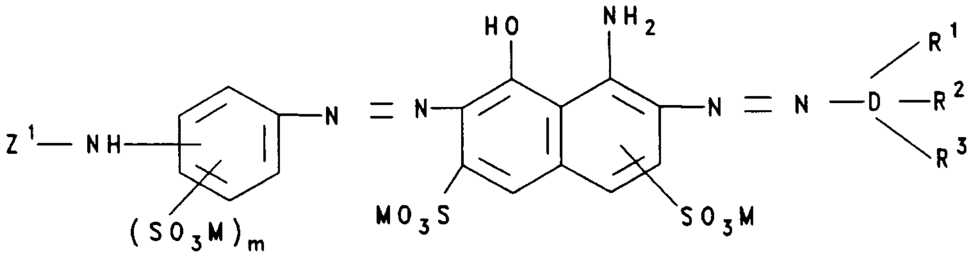

(12N)

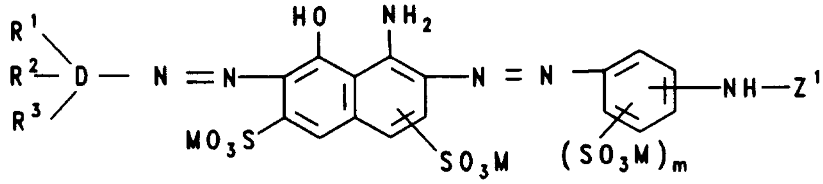

(12P)

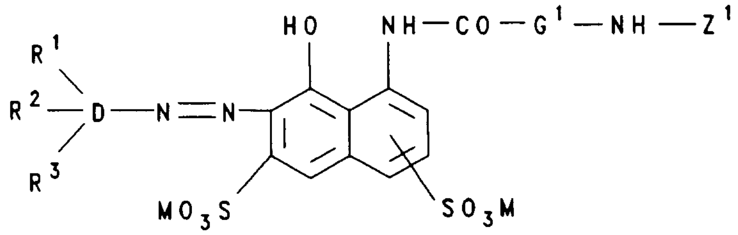

(12Q)

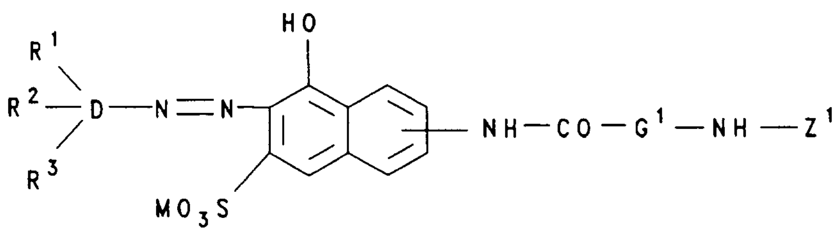

(12R)

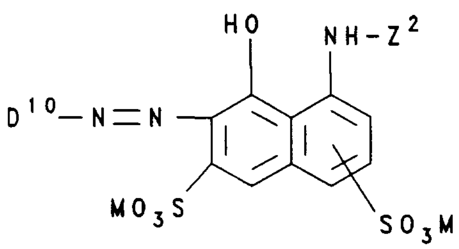

(12S)

entsprechen, in welchen bedeuten:

$Z^1$ ist ein Rest der allgemeinen Formel (2A)

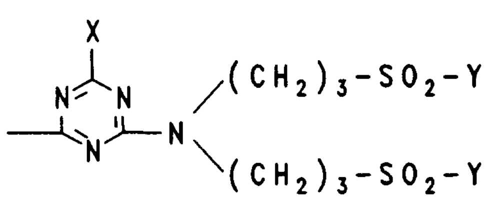

(2A)

in welcher X und Y die obengenannten, insbesondere bevorzugten, Bedeutungen haben;

$Z^2$ ist ein Rest der Formel (2A), in welcher X gleich Fluor ist;

M hat eine der obengenannten Bedeutungen;

$D^0$ ist ein Benzolring;

D ist ein Benzolring oder ist ein Naphthalinring, wobei die Azogruppe an den Naphthalinring

bevorzugt in $\beta$-Stellung gebunden ist und wobei im Falle, daß D den Naphthalinring bedeutet, $R^1$, $R^2$ und $R^3$ bevorzugt jedes, unabhängig voneinander, ein Wasserstoffatom oder eine Sulfogruppe bedeuten;

$D^{10}$ ist ein Mono-, Di- oder Trisulfo-napht-2-yl-Rest;

$R^A$ ist Wasserstoff oder Sulfo;

$R^B$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Sulfo oder Carboxy und ist bevorzugt Methyl, Methoxy, Brom, Chlor oder Sulfo und insbesondere bevorzugt Methyl oder Methoxy;

$R^C$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo, bevorzugt Wasserstoff, Methyl, Methoxy, Chlor, Carboxy, Sulfo oder Acetylamino und insbesondere bevorzugt Wasserstoff, Methoxy oder Sulfo;

$R^1$ ist Wasserstoff oder Sulfo;

$R^2$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo und ist bevorzugt Wasserstoff, Methyl, Methoxy, Brom, Chlor, Sulfo oder Carboxy und insbesondere bevorzugt Wasserstoff, Methyl, Methoxy oder Sulfo;

$R^3$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo, bevorzugt Wasserstoff, Methyl, Methoxy, Chlor, Carboxy, Sulfo oder Acetylamino und insbesondere bevorzugt Wasserstoff, Methoxy oder Sulfo;

$R^4$ ist Hydroxy oder Amino, bevorzugt Hydroxy;

$R^5$ ist Methyl, Carboxy, Carbomethoxy oder Carbethoxy, bevorzugt Methyl oder Carboxy;

$R^6$ ist Acetylamino, Ureido oder Methyl;

$R^7$ ist Wasserstoff, Alkyl von 1 bis 4 C-Atomen, wie Methyl und Ethyl, Alkoxy von 1 bis 4 C-Atomen, wie Methoxy und Ethoxy, Halogen, wie Brom und insbesondere Chlor, vorzugsweise Wasserstoff, Methyl, Ethyl, Methoxy, Ethoxy oder Chlor;

$R^8$ ist Wasserstoff oder Alkyl von 1 bis 4 C-Atomen, wie Methyl und Ethyl, Alkanoylamino von 2 bis 5 C-Atomen, wie Acetylamino und Propionylamino, oder Ureido, vorzugsweise Wasserstoff, Methyl, Ethyl, Methoxy, Ethoxy, Acetylamino oder Ureido;

$R^9$ ist Wasserstoff, Cyano, Carbamoyl, Sulfamoyl oder Sulfomethyl, bevorzugt Wasserstoff oder Carbamoyl;

$R^{21}$ hat eine der Bedeutungen von $R^1$;

$R^{22}$ hat eine der Bedeutungen von $R^2$;

$R^{23}$ hat eine der Bedeutungen von $R^3$;

$B^1$ ist Wasserstoff oder Alkyl von 1 bis 4 C-Atomen, wie Methyl und Ethyl, oder Alkyl von 2 bis 4 C-Atomen, wie Ethyl und Propyl, das durch Hydroxy, Carboxy, Sulfo oder Sulfato substituiert sein kann, oder ist Phenyl, das durch Sulfo, Methyl, Methoxy und/oder Carboxy substituiert sein kann;

G ist Alkyl von 1 bis 4 C-Atomen, wie Ethyl und Propyl, oder ist Benzoyl oder durch Sulfo, Carboxy und/oder Alkyl von 1 bis 4 C-Atomen, wie Methyl, substituiertes Benzoyl;

$G^1$ ist eine Gruppe der Formel -NH-alk- , -NH-phen- oder -alk- , in welchen alk für Alkylen von 2 bis 4 C-Atomen steht und phen Sulfo-phenylen oder Phenylen bedeutet;

m ist die Zahl Null, 1 oder 2 (wobei im Falle von m gleich Null diese Gruppe Wasserstoff ist);

in den Verbindungen der Formeln (12A), (12D), (12E), (12K) und (12R) steht die Amino- bzw. Amidogruppierung in 2- oder 3-Stellung an den 8-Naphthol-Rest und in den Verbindungen (12B), (12C), (12J), (12Q) und (12S) steht die eine Gruppe $-SO_3M$ in para- oder bevorzugt in meta-Stellung zur Amino- bzw. Amidocarbonyl-Gruppe gebunden.

Bevorzugte erfindungsgemäße Azofarbstoffe sind insbesondere diejenigen, die den allgemeinen Formeln (13a), (13b), (13c), (13d), (13e), (13f), (13g) und (13h) entsprechen:

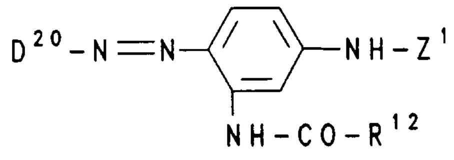

(13a)

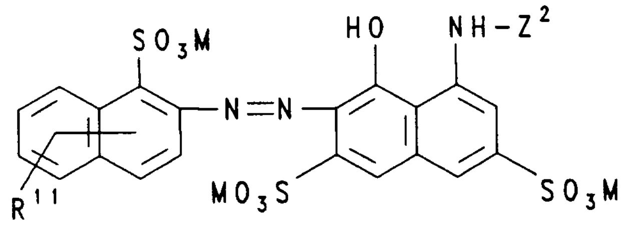

(13b)

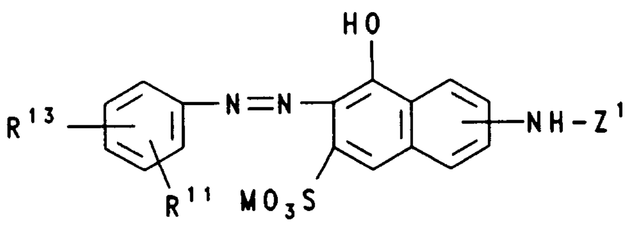

(13c)

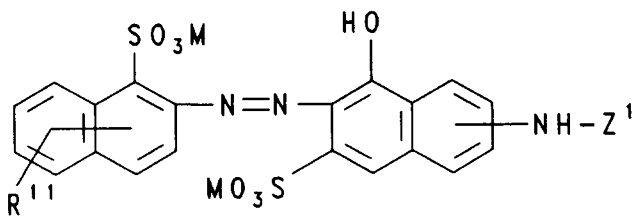

(13d)

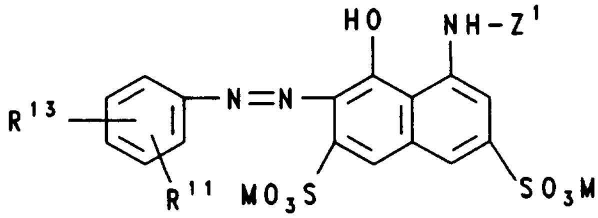

(13e)

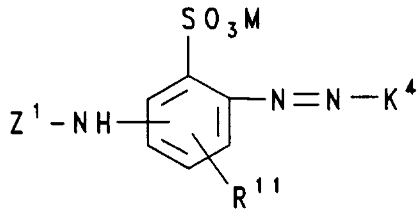

(13f)

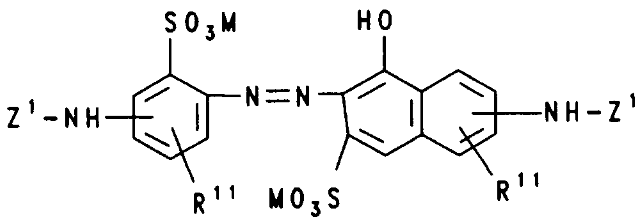

(13g)

$$D^{20}-N=N-K^{5}-Z^{1} \qquad (13h)$$

In diesen Formeln bedeuten:

| | |
|---|---|
| M, $Z^1$ und $Z^2$ | haben eine der oben genannten Bedeutungen; |
| $D^{20}$ | ist Monosulfophenyl, Disulfophenyl, Monosulfo-naphth-2-yl, Disulfonaphth-2-yl oder Trisulfo-naphth-2-yl; |
| $R^{11}$ | ist Wasserstoff oder Sulfo; |
| $R^{12}$ | ist Amino, Methyl oder Ethyl; |
| $R^{13}$ | ist Wasserstoff, Methyl oder Methoxy; |
| $K^4$ | ist 5,7-Disulfo-2-amino-naphth-1-yl oder ein Rest der allgemeinen Formel (14) |

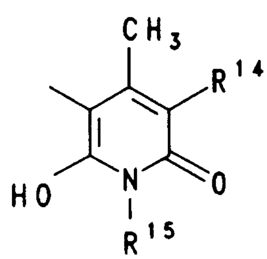

(14)

in welcher

| | |
|---|---|
| $R^{14}$ | Wasserstoff, Sulfo, Sulfoalkyl von 1 bis 4 C-Atomen, wie Sulfomethyl, Cyano oder Aminocarbonyl ist und |
| $R^{15}$ | Wasserstoff oder Alkyl von 1 bis 4 C-Atomen, wie Methyl oder Ethyl, ist oder Alkyl von 1 bis 4 C-Atomen, wie insbesondere Ethyl, ist, das durch Phenyl, Sulfophenyl oder Sulfo substituiert ist; |
| $K^5$ | ist ein Rest der allgemeinen Formel (15a), (15b), (15c), (15d) oder (15e) |

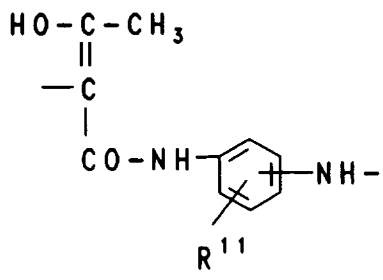

(15a)

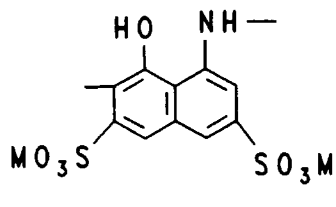

(15b)

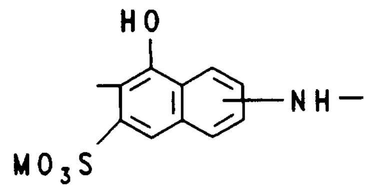

(15c)

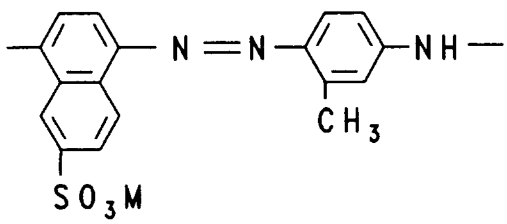

(15d)

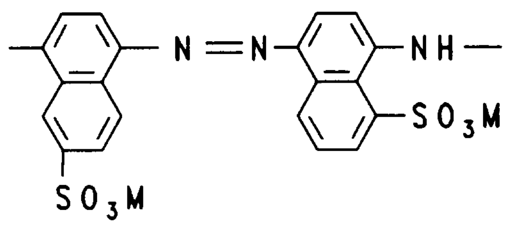

(15e)

in welchen M und $R^{11}$ eine der obengenannten Bedeutungen haben, wobei in den Formeln (13c), (13d), (13g) und (15c) die Gruppe -NH-$Z^1$ bzw. -NH- in 2- oder 3-Stellung an den 8-Hydroxy-naphthyl-Rest gebunden steht.

Die vorliegende Erfindung betrifft weiterhin Verfahren zur Herstellung der erfindungsgemäßen Farbstoffe der allgemeinen Formel (1). Sie lassen sich in an und für sich in üblicher Weise analog bekannten, für die jeweilige Farbstoffklasse spezifischen Synthesewegen herstellen, indem man für den jeweiligen Farbstoff typische Vorprodukte, von denen mindestens eines eine Gruppe der allgemeinen Formel (2) enthält, miteinander umsetzt, oder indem man eine Halogen-triazin-Verbindung der allgemeinen Formel (21)

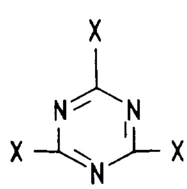

(21)

in welcher X eine der obengenannten Bedeutungen besitzt, wie beispielsweise 2,4,6-Trifluor-1,3,5-triazin (Cyanurfluorid) oder 2,4,6-Trichlor-1,3,5-triazin (Cyanurchlorid), mit einer aminogruppenhaltigen Ausgangsverbindung der allgemeinen Formel (20a), (20b), (20c), (20d) oder (20e)

$D^1 - N = N - (E - N = N)_v - K^2 - NH_2$ (20a)

$H_2H - D^2 - N = N - (E - N = N)_v - K^1$ (20b)

$H_2N - D^2 - N = N - (E - N = N)_v - K^2 - NH_2$ (20c)

$D^1 - N = N - K^o - N = N - D^2 - NH_2$ (20d)

$H_2N - D^2 - N = N - K^o - N = N - D^2 - NH_2$ (20e)

in welchen $D^1$, $D^2$, E, v, $K^1$, $K^2$ und $K^o$ die obengenannten Bedeutungen haben, und mit einer Aminoverbindung der allgemeinen Formel (22)

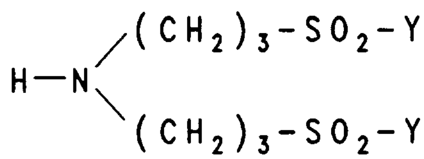

(22)

in welcher Y eine der obengenannten Bedeutungen hat, in beliebiger Reihenfolge miteinander umsetzt.

Erfindungsgemäße Verfahrensvarianten dieser erfindungsgemäßen Verfahrensweise sind beispielsweise dadurch gekennzeichnet, daß man eine Verbindung der allgemeinen Formel (23a), (23b), (23c), (23d) oder (23e)

$D^1 - N = N - (E - N = N)_v - K^2 - Z^o$ (23a)

$Z^o - D^2 - N = N - (E - N = N)_v - K^1$ (23b)

$Z^o - D^2 - N = N - (E - N = N)_v - K^2 - Z^o$ (23c)

$D^1 - N = N - K^o - N = N - D^2 - Z^o$ (23d)

$Z^o - D^2 - N = N - K^o - N = N - D^2 - Z^o$ (23e)

in welchen $D^1$, $D^2$, $K^1$, $K^2$, E, v und $K^o$ die obengenannten Bedeutungen haben und $Z^o$ ein Rest der allgemeinen Formel (23A)

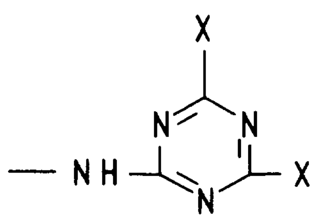

(23A)

ist, in welcher X die obengenannte Bedeutung besitzt, mit einer Aminoverbindung der allgemeinen Formel (22) umsetzt, oder daß man eine Verbindung der allgemeinen Formel (24)

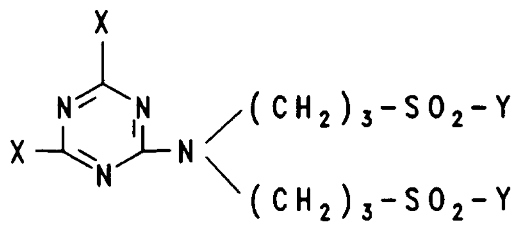

(24)

in welcher X und Y die obengenannten Bedeutungen haben, mit einer Verbindung der allgemeinen Formeln (20) der obengenannten Bedeutung umsetzt. Hiervon ist die Verfahrensweise der Umsetzung einer Verbindung der allgemeinen Formeln (23) mit einer Verbindung der allgemeinen Formel (22) bevorzugt.

Die Umsetzungen der Ausgangsverbindungen erfolgen im wäßrigen oder wäßrigorganischen Medium in Suspension oder Lösung. Führt man die Umsetzungen in einem wäßrig-organischen Medium durch, so ist das organische Medium beispielsweise Aceton, Dimethylformamid, Dimethylsulfoxid oder N-Methylpyrrolidon. Vorteilhaft wird der bei der Kondensation freiwerdende Halogenwasserstoff laufend durch Zugabe wäßriger Alkalihydroxide, -carbonate oder -bicarbonate neutralisiert. Die erste Kondensationsreaktion des Halogen-s-triazins der allgemeinen Formel (21) erfolgt in der Regel bei einer Temperatur zwischen -5 °C und + 20 °C, im Falle von X gleich Fluor bevorzugt bei einer Temperatur zwischen -5 °C und +5 °C, und bei einem pH-Wert zwischen 2 und 10, bevorzugt zwischen 6 und 8. Die nachfolgende Kondensationsreaktion mit der zweiten Aminoverbindung erfolgt in der Regel bei einer Temperatur zwischen 5 und 40 °C, im Falle von X gleich Fluor bevorzugt bei einer Temperatur zwischen 0 und 20 °C, und bei einem pH-Wert zwischen 3 und 9, bevorzugt zwischen 6 und 7.

Insbesondere erfolgt die Umsetzung zwischen einer Verbindung der allgemeinen Formeln (23) und einer Verbindung der allgemeinen Formel (22) bei einer Temperatur zwischen 5 und 40 °C, bevorzugt zwischen 10 und 30 °C, und bei einem pH-Wert zwischen 3 und 9, bevorzugt zwischen 6 und 7, wobei man im Falle, daß in der Verbindung der Formeln (23) X ein Fluoratom ist, bevorzugt die Umsetzung bei einer Temperatur zwischen 0 und 20 °C durchführt.

Ebenfalls erfolgt die Umsetzung einer Verbindung der allgemeinen Formel (24) mit einer Verbindung der allgemeinen Formeln (20) bei einer Temperatur zwischen 5 und 40 °C, bevorzugt zwischen 10 und 30 °C, und bei einem pH-Wert zwischen 2,5 und 9, bevorzugt zwischen 3 und 7, wobei im Falle des Einsatzes einer Verbindung der allgemeinen Formel (24) mit X gleich Fluor bevorzugt die Umsetzung bei einer Temperatur zwischen 0 und 20 °C durchgeführt wird.

Die Ausgangsverbindungen der allgemeinen Formeln (23) lassen sich, ausgehend von den Verbindungen (20), in an und für sich bekannter Verfahrensweise der Umsetzung von halogensubstituierten Triazinen mit aminogruppenhaltigen Verbindungen herstellen, wie dies beispielsweise oben für die erfindungsgemäßen Verfahrensweisen beschrieben ist, so ebenfalls in wäßrigem oder wäßrig-organischem Medium in der Regel bei einer Temperatur zwischen -5 °C und +40 °C, bevorzugt zwischen 0 und 30 °C, und bei einem pH-Wert zwischen 2 und 10, bevorzugt zwischen 5 und 7, wobei man im Falle einer Ausgangsverbindung der Formel (21) mit X gleich Fluor bevorzugt eine Reaktionstemperatur zwischen -5 °C und + 5 °C wählt. In gleicher Weise und unter den gleichen Verfahrensbedingungen lassen sich die Ausgangsverbindungen der allgemeinen Formel (24) durch Umsetzung einer Verbindung der allgemeinen Formel (21) mit einer Verbindung der allgemeinen Formel (22) herstellen.

Die Ausgangsverbindungen der allgemeinen Formeln (20) sind allgemein bekannt und in der Literatur, wie beispielsweise in den anfangs erwähnten Druckschriften, zahlreich beschrieben. Ebenso sind die Ausgangsverbindungen der allgemeinen Formel (22) aus der anfangs erwähnten Literatur bekannt.

Aromatische Amine, die als Diazokomponenten zur Synthese der erfindungsgemäßen Azofarbstoffe der allgemeinen Formeln (1) dienen und der allgemeinen Formel $D^1$-$NH_2$ entsprechen, sind beispielsweise: Anilin, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminodiphenyl, 1-Aminobenzol-2-, -3- oder -4-carbonsäure, 2-Aminodiphenylether, 1-Aminobenzol-2-, -3- oder -4-sulfonsäureamid, 1-Amino-3-trifluormethyl-benzol-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3-oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-ethoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1-Amino-3-oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-3,6- oder -5,7-disulfonsäure, 1-Aminonaphthalin-3,6- oder -5,7-disulfonsäure, 2-Amino-naphthalin-1-sulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 4-Aminoazobenzol-3,4'-disulfonsäure, 3-Methoxy-4-amino-6-methylazobenzol-2',4'-disulfonsäure und 3-Methoxy-4-amino-6-methylazobenzol-2',5'-disulfonsäure.

Ausgangsverbindungen entsprechend der allgemeinen Formel $H_2N\text{-}D_2\text{-}NH_2$ sind beispielsweise 1,4-Phenylen-diamin, 1,4-Phenylendiamin-2-sulfonsäure, 1,4-Phenylendiamin-2-carbonsäure, 1,4-Diamino-naphthalin-2-sulfonsäure, 2,6-Diamino-naphthalin-8-sulfonsäure, 2,6-Diamino-naphthalin-4,8-disulfonsäure, 1,3-Phenylen-diamin, 1,3-Phenylendiamin-4-sulfonsäure, 1,3-Phenylen-diamin-4,6-disulfonsäure, 1,4-Phenylendiamin-2,6-disulfonsäure, 1,4-Phenylendiamin-2,5-disulfonsäure und 1,4-Diamino-naphthalin-6-sulfonsäure.

Ausgangsverbindungen, die zur Herstellung von erfindungsgemäßen Disazofarbstoffen der allgemeinen Formeln (1) zunächst als Kupplungskomponente und sodann, in Form der gebildeten Amino-Azoverbindung, als Diazokomponente dienen und der allgemeinen Formel $H\text{-}E\text{-}NH_2$ entsprechen, sind beispielsweise Anilin, 3-Methyl-anilin, 2-Methoxy-5-methyl-anilin, 2,5-Dimethyl-anilin, 3-Ureido-anilin, 3-Acetylamino-anilin, 3-Propionylamino-anilin, 3-Butyrylamino-anilin, 3-Methoxy-anilin, 2-Methyl-5-acetylamino-anilin, 2-Methoxy-5-acetylamino-anilin, 2-Methoxy-5-methyl-anilin, 1,3-Diaminobenzol-4-sulfonsäure, 1-Amino-naphthalin-6-, -7- oder -8-sulfonsäure, 1-Amino-2-methoxy-naphthalin-6-sulfonsäure, 2-Amino-5-hydroxy-naphthalin-7-sulfonsäure, 2-Amino-5-hydroxy-naphthalin-1,7-disulfonsäure und 2-Amino-8-hydroxy-naphthalin-6-sulfonsäure.

Ausgangsverbindungen zur Herstellung der erfindungsgemäßen Azoverbindungen der allgemeinen Formeln (1), die als Kupplungskomponenten dienen und den allgemeinen Formeln $H\text{-}K^1$ oder $H\text{-}K^2\text{-}NH_2$ entsprechen, sind beispielsweise:

1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Acetylamino-5-hydroxynaphthalin-7-sulfonsäure,2-Amino-5-hydroxynaphthalin-1,7-disulfonsäure,2-Amino-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- und -4,6-disulfonsäure (1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfo-naphth-2'-yl)-3-methyl-5-pyrazolon, 1-(5',7'-Disulfo-naphth-2'-yl)-3-methyl-5-pyrazolon, 1-(2',5'-Dichlor-4'-sulfophenyl)-3-methyl-5-pyrazolon, 3-Aminocarbonyl-4-methyl-6-hydroxypyridon-2, 1-Ethyl-3-cyan- oder -3-chlor-4-methyl-6-hydroxypyridon-2, 1-Ethyl-3-sulfomethyl-4-methyl-6-hydroxypyridon, 1-Ethyl-3-carbamoyl-4-methyl-6-hydroxypyridon-(2), 1-Ethyl-3-sulfomethyl-4-methyl-5-carbamoyl-6-hydroxypyridon-(2),N-Acetoacetylaminobenzol, 1-(N-Acetoacetylamino)-2-methoxybenzol-5-sulfonsäure, 1-Amino-8-hydroxy-7-(phenylazo)-naphthalin-3,6-disulfonsäure, 1-Amino-8-hydroxy-7-(4'-sulfophenylazo)-naphthalin-3,6-disulfonsäure und 1-Amino-8-hydroxy-7-(2',5'-disulfophenylazo)-naphthalin-3,6-disulfonsäure.

Geht man bei der erfindungsgemäßen Synthese der Azofarbstoffe von Diazo- oder Kupplungskomponenten aus, die bereits die Gruppe der allgemeinen Formel (2) enthalten, erfolgen die Umsetzungen in der üblichen Verfahrensweise der Diazotierungs- und Kupplungsreaktionen, so die Diazotierung in der Regel bei einer Temperatur zwischen -5°C und + 15°C und einem pH-Wert unterhalb von 2 mittels einer starken Säure und Alkalinitrit in bevorzugt wäßrigem Medium und die Kupplungsreaktion in der Regel bei einem

pH-Wert zwischen 1,5 und 4,5 im Falle einer aminogruppenhaltigen Kupplungskomponente und bei einem pH-Wert zwischen 3 und 7,5 im Falle einer hydroxygruppenhaltigen Kupplungskomponente und bei einer Temperatur zwischen 0 und 25 °C, ebenso bevorzugt in wäßrigem Medium.

Die Abscheidung der erfindungsgemäß hergestellten Farbstoffe der allgemeinen Formeln (1) aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweisedurch Sprühtrocknung, wobei dieser Reaktionslösung eine Puffersubstanz zugeführt werden kann.

Die Farbstoffe der allgemeinen Formeln (1) - im nachfolgenden Farbstoffe (1) genannt - eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Farbstoffe (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die Farbstoffe (1) lassen sich auf verschiedene und an und für sich bekannter Weise auf das Fasermaterial applizieren und auf der Faser fixieren, so, indem man sie beispielsweise in gelöster Form, beispielsweise in Form einer wäßrigen Farbstofflösung oder -druckpaste, auf das Substrat aufbringt und sie auf diesem durch Hitzeeinwirkung und/oder durch Einwirkung eines alkalisch wirkenden Mittels fixiert. Solche Färbe- und Fixierweisen sind in der Literatur zahlreich beschrieben (s. beispielsweise Europäische Patentanmeldungs-Veröffentlichung Nr. 0 181 585 A2 und die anfangs genannten Druckschriften).

Gegenstand der vorliegenden Erfindung ist deshalb auch die Verwendung der Farbstoffe (1) zum Färben (einschließlich des Bedrucken) dieser Materialien bzw. Verfahren zum Färben (und Bedrucken) solcher Materialien in an und für sich üblicher Verfahrensweise, bei welchen ein Farbstoff (1) als Farbmittel eingesetzt wird, indem man den Farbstoff (1) im wäßrigen Medium auf das Material appliziert und ihn mittels Wärme oder mittels einer alkalisch wirkenden Verbindung oder mittels beidem auf dem Material fixiert.

Die Farbstoffe (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden. Die mit den Farbstoffen (1) erhältlichen erfindungsgemäßen Färbungen und Drucke besitzen, insbesondere auf Cellulosefasermaterialien, eine hohe Farbstärke und eine hohe Faser-Farbstoff-Bindungsstabilität sowohl in saurem als auch in alkalischem Bereich, weiterhin, insbesondere auf Cellulosefasermaterialien, gute Lichtechtheiten sowohl im trockenen Zustand der Färbung als auch im nassen, beispielsweise im wasserfeuchten oder mit einer Schweißlösung befeuchteten, Zustand sowie gute Naßechtheiten, wie beispielsweise gute Waschechtheiten bei 60 bis 95 °C, auch in Gegenwart von Perboraten, gute saure und alkalische Walk-, Überfärbe- und Schweißechtheiten, eine hohe Dampfbeständigkeit, gute Alkali-, Säure-, Wasser- und Seewasserechtheiten und des weiteren gute Plissier-, Bügel- und Reibechtheiten. Ebenso besitzen sie eine gute Säurelagerbeständigkeit ("acid fading") beim Lagern von feuchten, noch Essigsäure enthaltendem, gefärbtem Material.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben; im allgemeinen werden sie in Form ihrer Alkalimetallsalze, wie Lithium-, Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima ($\lambda_{max}$) im sichtbaren Bereich wurden anhand ihrer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

Beispiel 1

Eine neutrale Lösung von 27,3 Teilen der Azoverbindung 4-(3',6',8'-Trisulfonaphth-2'-yl)-azo-3-ureidoanilin in 300 Teilen Wasser werden bei einer Temperatur zwischen -3 °C und + 5 °C mit 9,2 Teilen Cyanurfluorid versetzt, wobei ein pH-Wert von 6 bis 7 mittels einer 15 %igen wäßrigen Natriumcarbonatlösung aufrechterhalten wird. Nach Beendigung der Umsetzung gibt man 19,5 Teile Bis-[γ-(β'-chlorethylsulfonyl)-propyl]-amin-Hydrochlorid hinzu und erhöht unter weiterer Einhaltung eines pH-Wertes zwischen 6 und 7 die Reaktionstemperatur innerhalb etwa 30 Minuten auf 20 bis 25 °C. Man rührt noch vier Stunden bei 20 bis 25 °C nach, fügt sodann 8,9 Teile Dinatriumhydrogenphosphat hinzu und isoliert den erfindungsgemäßen Azofarbstoff, der, in Form der freien Säure geschrieben, die Formel

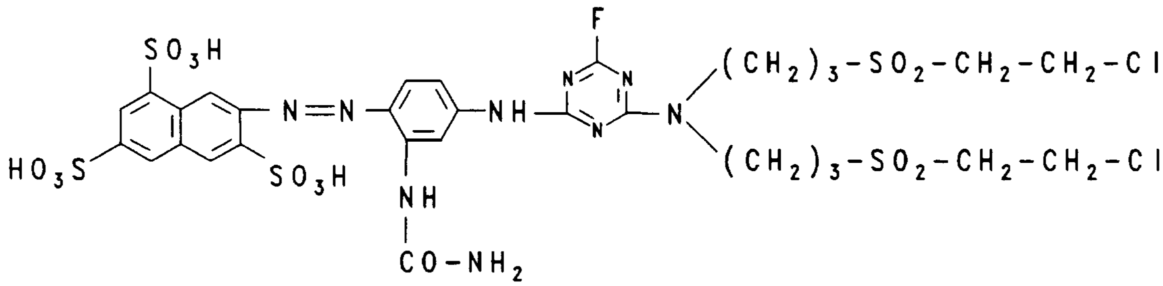

($\lambda_{max}$ = 418 nm)

besitzt, durch Aussalzen mit Kaliumchlorid. Der erfindungsgemäße Farbstoff zeigt sehr gute faserreaktive Farbstoffeigenschaften und liefert nach den für faserreaktive Farbstoffe üblichen Anwendungsmethoden auf den in der Beschreibung genannten Materialien, wie insbesondere Cellulosefasermaterialien, wie Baumwolle, farbstarke goldgelbe Färbungen und Drucke mit guten Echtheitseigenschaften, von denen insbesondere die guten Licht- und Schweißechtheiten hervorgehoben werden können.

Beispiel 2

Zur Herstellung eines erfindungsgemäßen Disazofarbstoffes verfährt man gemäß der Verfahrensweise des Beispieles 1, indem man 36,8 Teile der Disazoverbindung 4-[4'-(4",6",8"-Trisulfo-naphth-2"-yl)-azo-7'-sulfo-naphth-1'-yl]-azo-3-methyl-anilin in 300 Teilen Wasser bei einem pH-Wert zwischen 6 und 7 und einer Temperatur von etwa 0 °C mit 9,2 Teilen Cyanurfluorid umsetzt und die Difluor-triazinylamino-Disazoverbindung anschließend, gemäß den Angaben des Beispieles 1, mit 19,5 Teilen Bis-[γ-(β'-chlorethylsulfonyl)-propyl]-amin-Hydrochlorid zum erfindungsgemäßen Disazofarbstoff der Formel (in Form der freien Säure geschrieben)

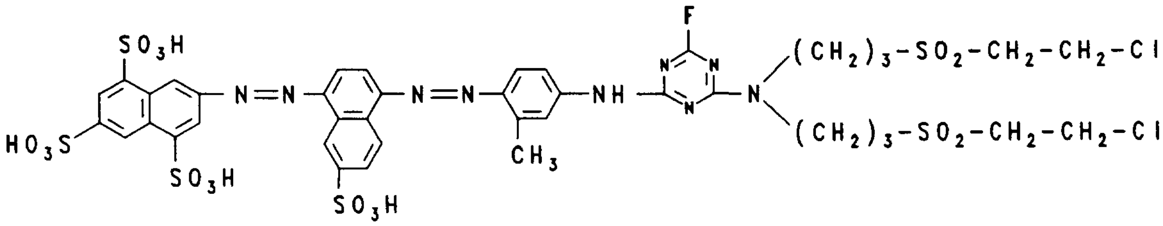

($\lambda_{max}$ = 447 nm)

umsetzt. Nach Beendigung der Reaktion werden der Farbstofflösung 8,9 Teile Dinatriumhydrogenphosphat hinzugegeben, und der Farbstoff wird in üblicher Weise durch Aussalzen oder durch Eindampfen oder Sprühtrocknung der Syntheselösung isoliert. Er liefert nach den für faserreaktiven Farbstoffe üblichen Anwendungsmethoden auf den in der Beschreibung genannten Materialien, wie beispielsweise Baumwolle, farbstarke braune Färbungen und Drucke mit guten Echtheitseigenschaften, von denen insbesondere die guten Licht- und Schweißlichtechtheiten hervorgehoben werden können.

Beispiel 3

Zu einer neutralen Lösung von 0 °C von 22,7 Teilen der Azoverbindung 7-(2'-Sulfo-4'-methoxy-phenyl)-azo-6-sulfo-3-amino-8-hydroxy-naphthalin in 300 Teilen Wasser gibt man unter Einhaltung eines pH-Wertes

zwischen 6 und 7 innerhalb von etwa 30 Minuten eine Lösung aus 10 Teilen Cyanurchlorid in 100 Teilen Aceton. Man rührt noch einige Zeit weiter, gibt sodann 19,5 Teile Bis-[γ-(β'-chlorethylsulfonyl)-propyl]-amin-Hydrochlorid hinzu, erwärmt den Reaktionsansatz auf 80 °C und rührt unter Einhaltung des pH-Wertes von 6 bis 7 noch etwa 14 Stunden bei 80 °C weiter. Danach wird mit 85 %iger wäßriger Phosphorsäure der pH-Wert auf 5 gestellt.

Der erfindungsgemäße Azofarbstoff wird durch Eindampfen der Reaktionslösung als Alkalimetallsalz (Natriumsalz) isoliert. Er besitzt, in Form der freien Säure geschrieben, die Formel

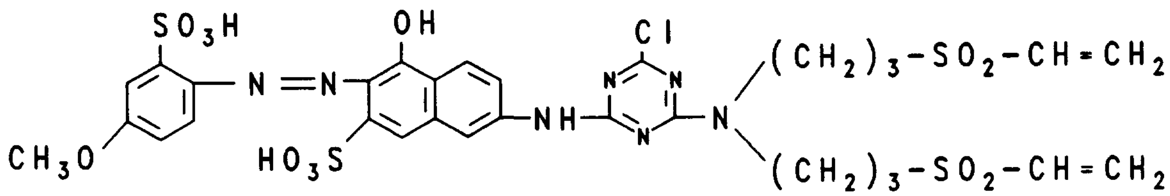

($\lambda_{max}$ = 498 nm)

und färbt die in der Beschreibung genannten Materialien, wie insbesondere Baumwolle, in farbstarken, brillanten Scharlachtönen mit guten Echtheitseigenschaften.

Beispiel 4

210 Teile einer wäßrigen Lösung mit 10 Teilen des erfindungsgemäßen Azofarbstoffes von Beispiel 1 werden mit konzentrierter wäßriger Natronlauge bei 20 °C auf einen pH-Wert zwischen 9,5 und 10 gestellt. Der Ansatz wird unter Einhaltung dieses pH-Bereiches bei 20 °C noch etwa 5 Stunden weitergerührt und sodann mit einer wäßrigen 2 N-Salzsäure auf einen pH-Wert von 7 gestellt und mit 8,9 Teilen Dinatriumhydrogenphosphat versetzt.

Der erhaltene erfindungsgemäße Azofarbstoff der Formel (in Form der freien Säure geschrieben)

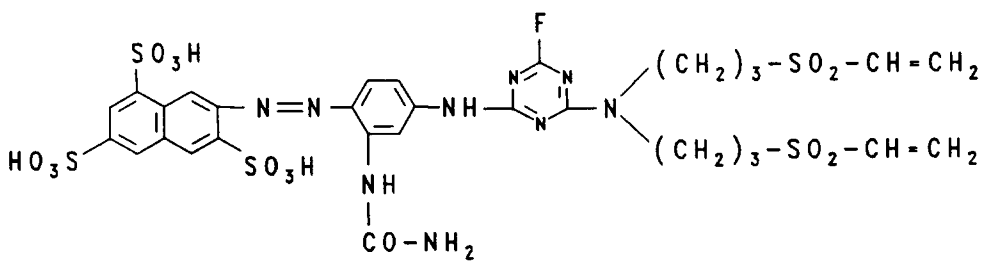

($\lambda_{max}$ = 418 nm)

wird durch Eindampfen der Syntheselösung als Natriumsalz isoliert. Er färbt beispielsweise Baumwolle gemäß den bekannten Applikations- und Fixierverfahren in farbstarken, goldgelben Tönen mit guten Echtheitseigenschaften, die denen des Farbstoffes des Beispieles entsprechen.

Beispiel 5

a) 127,6 Teile 1-Amino-8-naphthol-3,6-disulfonsäure werden unter Zugabe von 16,8 Teilen Natriumfluorid und der erforderlichen Menge an wäßriger Natronlauge bei einem pH-Wert zwischen 6,5 und 7 in 2000 Teilen Wasser gelöst und in einem kontinuierlichen Verfahren mit 55 Teilen Cyanurfluorid umgesetzt. Die Reaktionslösung wird in eine Suspension von 156 Teilen Bis-[γ-(β'-chlorethylsulfonyl)-propyl]-amin-Hydrochlorid in 500 Teilen Eiswasser unter Einhaltung eines pH-Wertes zwischen 8 und 10 eingerührt. Der Ansatz wird bei 0 bis 5 °C und einem pH-Wert von 6 weitergerührt und das erhaltene Produkt, das aus einem Gemisch aus 1-{4'-Fluor-6'-[γ-(β'-chlorethylsulfonyl)-propyl]-amino-1',3',5'-triazin-6'-yl}-amino-3,6-disulfo-8-hydroxy-naphthalin und 1-[4'-Fluor-6'-(γ-vinylsulfonylpropyl)-amino-1',3',5'-triazin-6'-yl]-amino-3,6-disulfo-8-hydroxynaphthalin besteht, durch Aussalzen mit Natriumchlorid als Natriumsalz isoliert.

b) 74,8 Teile 2-Sulfo-4-methyl-anilin werden in üblicher Weise in einer wäßrigen salzsauren Lösung diazotiert. Die erhaltene Diazoniumsalzsuspension gibt man langsam unter gutem Rühren zu einer Suspension von 293 Teilen der unter Abschnitt a) hergestellten Fluortriazinylamino-naphthol-Verbindung und führt die Kupplungsreaktion unter Einhaltung eines pH-Wertes von 6 und einer Temperatur zwischen 15 und 20 °C durch. Die erfindungsgemäßen Azofarbstoffe, die, in Form der freien Säure geschrieben, die Formel

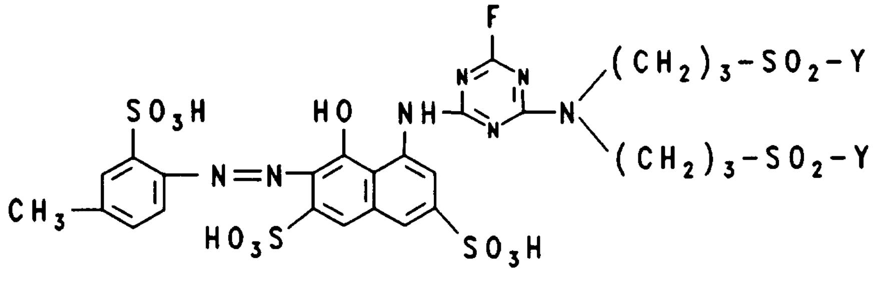

($\lambda_{max}$ = 544 nm)

besitzen, worin Y für Vinyl und $\beta$-Chlorethyl steht, werden durch Zugabe von Natriumchlorid ausgesalzen und isoliert. Sie besitzen sehr gute faserreaktive Farbstoffeigenschaften und färben beispielsweise Baumwolle nach den für faserreaktiven Farbstoffe üblichen Anwendungs- und Fixierverfahren in farbstarken blaustichig roten Tönen mit guten Echtheitseigenschaften.

Beispiel 6

Man geht von 76,8 Teilen der gemäß Beispiel 5a) hergestellten und fein gemahlenen Ausgangsverbindung aus und suspendiert sie in 500 Teilen Eiswasser. Sodann gibt man eine auf üblichem Wege hergestellte Diazoniumsalzsuspension von 30,3 Teilen 2-Aminonaphthalin-1,5-disulfonsäure hinzu und führt die Kupplungsreaktion unter Einhaltung eines pH-Wertes von 6 und einer Temperatur von etwa 15 °C durch. Man isoliert das Gemisch der erfindungsgemäßen Azofarbstoffe der Formel (in Form der freien Säure geschrieben)

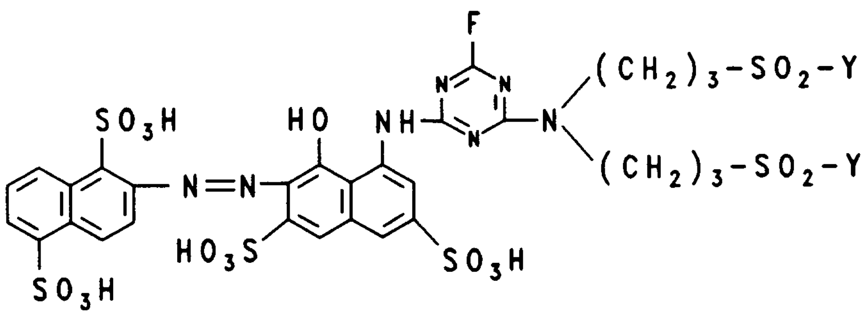

($\lambda_{max}$ = 539 nm)

in welcher Y Vinyl und $\beta$-Chlorethyl bedeutet, in üblicher Weise durch Aussalzen, beispielsweise mit Natriumchlorid, als Alkalimetallsalz. Man erhält mit den Farbstoffen auf den in der Beschreibung genannten Fasermaterialien, wie beispielsweise Baumwolle, farbstarke echte, brillante blaustichig rote Färbungen mit guten Echtheitseigenschaften.

Beispiel 7

Eine neutrale Lösung von 27 Teilen der Azoverbindung 7-(1',5'-Disulfo-naphth-2'-yl)-azo-3-amino-6-sulfo-8-hydroxy-naphthalin in 250 Teilen Wasser wird bei einer Temperatur zwischen -3 °C und +5 °C unter

gutem Rühren und Einhaltung eines pH-Wertes von 6 bis 7 mittels 15 %iger wäßriger Natriumcarbonatlösung mit 9,2 Teilen Cyanurfluorid versetzt. Danach gibt man 19,5 Teile Bis-[γ-(β'-chlorethylsulfonyl)-propyl]-amin-Hydrochlorid hinzu und rührt unter Erwärmen auf 20 bis 25 °C während etwa 30 Minuten und unter weiterer Einhaltung des angegebenen pH-Bereiches etwa vier Stunden nach. Anschließend gibt man 8,9 Teile Dinatriumhydrogenphosphat hinzu und isoliert den erfindungsgemäßen Azofarbstoff durch Aussalzen mit Kaliumchlorid.

Er besitzt, in der Form der freien Säure geschrieben, die Formel

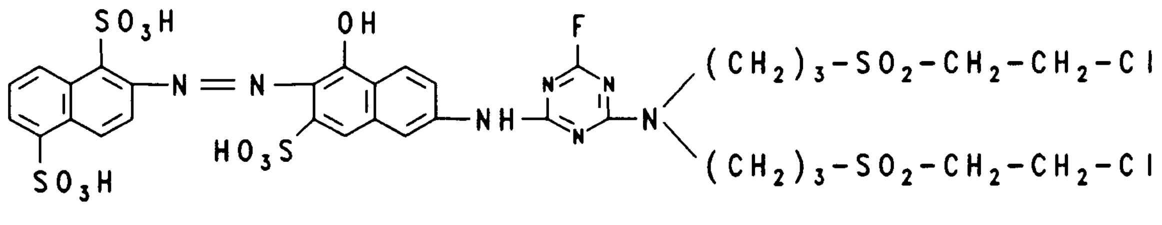

($\lambda_{max}$ = 485 nm).

und zeichnet sich durch sehr gute Farbstoffeigenschaften aus. Beispielsweise auf Baumwolle liefert er brillante orange Färbungen und Drucke mit guten Echtheiten.

Beispiel 8

a) Zu einer Lösung von 95,6 Teilen 6-Sulfo-3-amino-8-naphthol und 9,6 Teilen Lithiumhydroxid in 2500 Teilen Eiswasser gibt man langsam unter gutem Rühren und unter Einhaltung eines pH-Wertes zwischen 3 und 5 55 Teile Cyanurchlorid und führt die Umsetzung unter diesen Reaktionsbedingungen zu Ende. Sodann gibt man den Ansatz unter Rühren zu einer Suspension mit einem pH-Wert zwischen 8 und 10 von 156 Teilen Bis-[γ-(β'-chlorethylsulfonyl)-propyl]-amin-Hydrochlorid in 500 Teilen Eiswasser und führt die Umsetzung unter Einhaltung dieses pH-Bereiches und bei etwa 0 bis 5 °C durch. Das erhaltene Umsetzungsprodukt, in welchem die β-Chlorethylsulfonyl-Gruppen teilweise in Vinylsulfonyl-Gruppen übergegangen sind und das der Formel (in Form der freien Säure geschrieben)

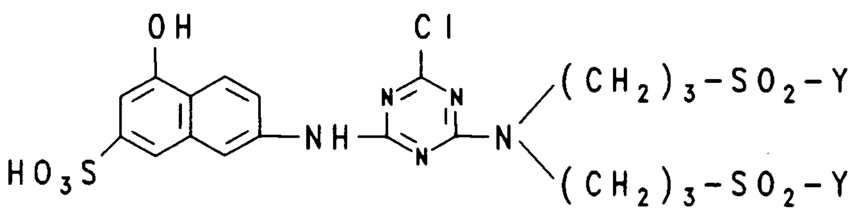

entspricht, in welcher Y Vinyl und β-Chlorethyl bedeutet, kann durch Aussalzen mit Natriumchlorid isoliert werden. Bevorzugt erfolgt jedoch die Weiterverarbeitung dieses Zwischenproduktes zu einem erfindungsgemäßen Azofarbstoff direkt in dem erhaltenen Syntheseansatz.

b) 100,5 Teile 2,5-Disulfo-anilin werden in üblicher Weise in stark salzsaurer wäßriger Lösung diazotiert. Die erhaltene Diazoniumsalzlösung wird unter Einhaltung eines pH-Wertes von etwa 6 in die gemäß Abschnitt a) erhaltene Suspension des Zwischenproduktes eingerührt. Man führt die Kupplungsreaktion bei pH 6 und einer Temperatur von etwa 15 bis 20 °C zu Ende und isoliert das Gemisch der erfindungsgemäßen Azofarbstoffe der Formel (in Form der freien Säure geschrieben)

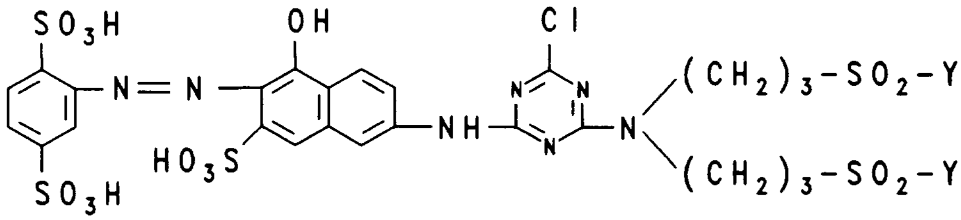

($\lambda_{max}$ = 471 nm)

in welcher Y für Vinyl und β-Chlorethyl steht, in üblicher Weise als Alkalimetallsalz. Nach den für faserreaktive Farbstoffe üblichen Anwendungsverfahren erhält man beispielsweise auf Baumwolle farbstarke, orange Färbungen mit guten Echtheitseigenschaften.

Beispiele 9 bis 108

In den nachfolgenden Tabellenbeispielen sind weitere erfindungsgemäße Azofarbstoffe entsprechend der allgemeinen Formel (A) mit Hilfe der Komponenten dieser Formel (A)

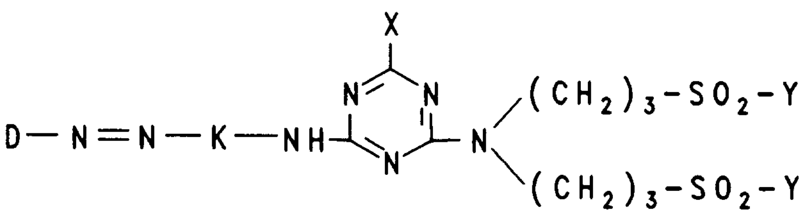

(A)

beschrieben. Sie lassen sich in einer der erfindungsgemäßer Herstellungsweisen, beispielsweise analog einem der obigen Beispiele, unter Einsatz der aus dem jeweiligen Tabellenbeispiel in Verbindung mit der allgemeinen Formel (A) ersichtlichen Komponenten (wie der Diazokomponente $D-NH_2$ , der kupplungsfähigen Verbindung $H-K-NH_2$ , Cyanurchlorid oder Cyanurfluorid und einer Verbindung entsprechend der allgemeinen Formel (22)) herstellen. Sie besitzen sehr gute faserreaktive Farbstoffeigenschaften und färben die in der Beschreibung genannten Materialien, insbesondere Cellulosefasermaterialien, wie Baumwolle, in den in dem jeweiligen Tabellenbeispiel (hier für Baumwolle) angegebenen Tönen in hoher Farbstärke und mit guten Echtheiten.

| Bsp. | Azofarbstoff der Formel (A) | | | | Farbton |
|---|---|---|---|---|---|
| | Rest D | Rest -K-NH- | Rest X | Rest Y | |
| 9 | 4-Sulfo-phenyl | 3-Ureido-phen-4,1-ylen-1-amino | Fluor | Vinyl | gelb (382) |
| 10 | dito | 3-Acetylamino-phen-4,1-ylen-1-amino | Fluor | Vinyl | gelb (383) |
| 11 | 2,4-Disulfo-phenyl | dito | Fluor | Vinyl | gelb (385) |
| 12 | dito | 3-Ureido-phen-4,1-ylen-1-amino | Fluor | Vinyl | gelb (382) |
| 13 | 2,5-Disulfo-phenyl | dito | Fluor | Vinyl | gelb (381) |
| 14 | 2-Sulfo-4-methoxy-phenyl | 6-Sulfo-8-hydroxy-naphth-7,3-ylen-3-amino | Chlor | Vinyl | brillant-scharlach (496) |
| 15 | 4-Sulfo-phenyl | 3-Ureido-phen-4,1-ylen-1-amino | Fluor | ß-Chlorethyl | gelb (382) |
| 16 | dito | 3-Acetylamino-phen-4,1-ylen-1-amino | Fluor | ß-Chlorethyl | gelb (383) |
| 17 | 2,4-Disulfo-phenyl | dito | Fluor | ß-Chlorethyl | gelb (385) |
| 18 | dito | 3-Ureido-phen-4,1-ylen-1-amino | Fluor | ß-Chlorethyl | gelb (382) |
| 19 | 2,5-Disulfo-phenyl | dito | Fluor | ß-Chlorethyl | gelb (381) |

| Bsp. | Azofarbstoff der Formel (A) Rest D | Rest -K-NH- | Rest X | Rest Y | Farbton |
|---|---|---|---|---|---|
| 20 | dito | 3-Acetylamino-phen-4,1-ylen-1-amino | Fluor | ß-Chlorethyl | gelb (386) |
| 21 | 3,6,8-Trisulfo-naphth-2-yl | dito | Fluor | Vinyl | gelb (421) |
| 22 | 4,6,8-Trisulfo-naphth-2-yl | dito | Fluor | ß-Chlorethyl | gelb (418) |
| 23 | 1,5-Disulfo-naphth-2-yl | 6-Sulfo-8-hydroxy-naphth-7,3-ylen-3-amino | Fluor | ß-Chlorethyl | orange (482) |
| 24 | 1-Sulfo-naphth-2-yl | dito | Fluor | Vinyl | orange (485) |
| 25 | 3,6,8-Trisulfo-naphth-2-yl | dito | Fluor | ß-Chlorethyl | orange (481) |
| 26 | 2,5-Disulfo-4-methoxy-phenyl | dito | Fluor | ß-Chlorethyl | scharlach (498) |
| 27 | 2-Sulfo-4-methoxy-phenyl | dito | Fluor | ß-Chlorethyl | scharlach (497) |
| 28 | 2,5-Disulfo-phenyl | 3,6-Disulfo-8-hydroxy-naphth-1-(4'-aminocarbonyl-phen)-7,1'-ylen-1'-amino | Fluor | ß-Chlorethyl | blaustichig rot (535) |

| Bsp. | Azofarbstoff der Formel (A) | | | | Farbton |
|---|---|---|---|---|---|
| | Rest D | Rest -K-NH- | Rest X | Rest Y | |
| 29 | 2,5-Disulfo-phenyl | 3,6-Disulfo-8-hydroxy-naphth-1-(3'-aminocarbonyl-phen)-7,1'-ylen-1'-amino | Fluor | ß-Chlorethyl | blaustichig rot (538) |
| 30 | 1-Sulfo-naphth-2-yl | dito | Fluor | ß-Chlorethyl | blaustichig rot (542) |
| 31 | 1,5-Disulfo-naphth-2-yl | dito | Fluor | ß-Chlorethyl | blaustichig rot (540) |
| 32 | 1,5,7-Trisulfo-naphth-2-yl | dito | Fluor | ß-Chlorethyl | blaustichig rot (545) |
| 33 | 2-Sulfo-4-methyl-phenyl | dito | Fluor | ß-Chlorethyl | blaustichig rot (539) |
| 34 | 2-Sulfo-4-chlor-phenyl | dito | Fluor | ß-Chlorethyl | blaustichig rot (544) |

| Bsp. | Azofarbstoff der Formel (A) | | | | Farbton |
|---|---|---|---|---|---|
| | Rest D | Rest -K-NH- | Rest X | Rest Y | |
| 35 | 2-Sulfo-4-methoxy-phenyl | dito | Fluor | Vinyl | blaustichig rot (558) |
| 36 | 2,5-Disulfo-4-methoxy-phenyl | dito | Fluor | Vinyl | blaustichig rot (561) |
| 37 | 4-(2′,4′-Disulfo-phenyl)-azo-6-sulfo-naphth-1-yl | 8-Sulfo-naphth-4,1-ylen-1-amino | Fluor | ß-Chlorethyl | braun (435) |
| 38 | 4-(2′,5′,7′-Trisulfo-naphth-1′-yl)-azo-6-sulfo-naphth-1-yl | dito | Fluor | ß-Chlorethyl | braun (451) |
| 39 | 4-(2′,4′-Disulfo-phenyl)-azo-6-sulfo-naphth-1-yl | 3-Methyl-phen-4,1-ylen-1-amino | Fluor | ß-Chlorethyl | braun (449) |
| 40 | 4-(4′,8′-Disulfo-naphth-2′-yl)-azo-6-sulfo-naphth-1-yl | dito | Fluor | ß-Chlorethyl | braun (452) |

| Bsp. | Azofarbstoff der Formel (A) | | | | Farbton |
|---|---|---|---|---|---|
| | Rest D | Rest -K-NH- | Rest X | Rest Y | |
| 41 | 4-(4',7'-Disulfo-naphth-1'-yl)-azo-6-sulfo-naphth-1-yl | dito | Fluor | Vinyl | braun (455) |
| 42 | 4-(2',5'-Disulfo-phenyl)-azo-6-sulfo-naphth-1-yl | dito | Fluor | Vinyl | braun (453) |
| 43 | dito | 8-Sulfo-naphth-4,1-ylen-1-amino | Fluor | ß-Chlorethyl | braun (458) |
| 44 | 4,8-Disulfo-naphth-2-yl | 3-Acetylamino-phen-4,1-ylen-1-amino | Fluor | ß-Chlorethyl | gelb (384) |
| 45 | 5,7-Disulfo-naphth-2-yl | dito | Fluor | ß-Chlorethyl | gelb (381) |
| 46 | dito | 3-Ureido-phen-4,1-ylen-1-amino | Fluor | ß-Chlorethyl | gelb (385) |
| 47 | 4,8-Disulfo-naphth-2-yl | dito | Fluor | ß-Chlorethyl | gelb (388) |
| 48 | 3,6,8-Trisulfo-naphth-2-yl | dito | Fluor | ß-Chlorethyl | goldgelb (417) |
| 49 | dito | dito | Chlor | Vinyl | goldgelb (422) |

| Bsp. | Azofarbstoff der Formel (A) | | | | Farbton |
|---|---|---|---|---|---|
| | Rest D | Rest -K-NH- | Rest X | Rest Y | |
| 50 | 4-(4',6',8'-Trisulfo-naphth-2'-yl)-azo-7-sulfo-naphth-1-yl | 3-Methyl-phen-4,1-ylen-1-amino | Fluor | ß-Chlorethyl | braun (452) |
| 51 | dito | dito | Chlor | Vinyl | braun (459) |
| 52 | 3,6,8-Trisulfo-naphth-2-yl | 3-Ureido-phen-4,1-ylen-1-amino | Fluor | Vinyl | goldgelb (422) |
| 53 | dito | dito | Chlor | Vinyl | goldgelb (419) |
| 54 | 4-Sulfo-phenyl | 3-Ureido-phen-4,1-ylen-1-amino | Chlor | Vinyl | gelb (384) |
| 55 | dito | 3-Acetylamino-phen-4,1-ylen-1-amino | Chlor | Vinyl | gelb (381) |
| 56 | 2,4-Disulfo-phenyl | dito | Chlor | Vinyl | gelb (387) |
| 57 | dito | 3-Ureido-phen-4,1-ylen-1-amino | Chlor | Vinyl | gelb (382) |
| 58 | 2,5-Disulfo-phenyl | dito | Chlor | Vinyl | gelb (381) |
| 59 | dito | 3-Acetylamino-phen-4,1-ylen-1-amino | Chlor | Vinyl | gelb (385) |
| 60 | 3,6,8-Trisulfo-naphth-2-yl | dito | Chlor | ß-Chlorethyl | gelb (418) |

| | Azofarbstoff der Formel (A) | | | | |
|---|---|---|---|---|---|
| Bsp. | Rest D | Rest -K-NH- | Rest X | Rest Y | Farbton |
| 61 | 4,6,8-Trisulfo-naphth-2-yl | dito | Chlor | ß-Chlorethyl | gelb (422) |
| 62 | 1,5-Disulfo-naphth-2-yl | 6-Sulfo-8-hydroxy-naphth-7,3-ylen-3-amino | Chlor | ß-Chlorethyl | orange (484) |
| 63 | 1-Sulfo-naphth-2-yl | dito | Chlor | Vinyl | orange (487) |
| 64 | 3,6,8-Trisulfo-naphth-2-yl | dito | Chlor | ß-Chlorethyl | orange (485) |
| 65 | 2,5-Disulfo-4-methoxy-phenyl | dito | Chlor | Vinyl | scharlach (498) |
| 66 | 2-Sulfo-4-methoxy-phenyl | dito | Chlor | ß-Chlorethyl | scharlach (499) |
| 67 | 2,5-Disulfo-phenyl | 3,6-Disulfo-8-hydroxy-naphth-1-(4'-aminocarbonyl-phen)-7,1'-ylen-1'-amino | Chlor | ß-Chlorethyl | blaustichig rot (538) |
| 68 | 2,5-Disulfo-phenyl | 3,6-Disulfo-8-hydroxy-naphth-1-(3'-aminocarbonyl-phen)-7,1'-ylen-1'-amino | Chlor | Vinyl | blaustichig rot (541) |

| Bsp. | Azofarbstoff der Formel (A) | | | | Farbton |
|---|---|---|---|---|---|
| | Rest D | Rest -K-NH- | Rest X | Rest Y | |
| 69 | 1-Sulfo-naphth-2-yl | dito | Chlor | Vinyl | blaustichig rot (545) |
| 70 | 1,5-Disulfo-naphth-2-yl | dito | Chlor | ß-Chlorethyl | blaustichig rot (542) |
| 71 | 1,5,7-Trisulfo-naphth-2-yl | dito | Chlor | ß-Chlorethyl | blaustichig rot (543) |
| 72 | 2-Sulfo-4-methyl-phenyl | dito | Chlor | Vinyl | blaustichig rot (544) |
| 73 | 2-Sulfo-4-methoxy-phenyl | dito | Chlor | Vinyl | blaustichig rot (558) |
| 74 | 2,5-Disulfo-4-methoxy-phenyl | dito | Chlor | ß-Chlorethyl | blaustichig rot (559) |
| 75 | 4-(2',4'-Disulfo-phenyl)-azo-6-sulfo-naphth-1-yl | 8-Sulfo-naphth-4,1-ylen-1-amino | Chlor | ß-Chlorethyl | braun (451) |

| Bsp. | Azofarbstoff der Formel (A) | | | | Farbton |
|---|---|---|---|---|---|
| | Rest D | Rest -K-NH- | Rest X | Rest Y | |
| 76 | 4-(2',5',7'-Trisulfo-naphth-1'-yl)-azo-6-sulfo-naphth-1-yl | dito | Chlor | ß-Chlorethyl | braun (456) |
| 77 | 4-(2',4'-Disulfo-phenyl)-azo-6-sulfo-naphth-1-yl | 3-Methyl-phen-4,1-ylen-1-amino | Chlor | Vinyl | braun (454) |
| 78 | 4-(4',8'-Disulfo-naphth-2'-yl)-azo-6-sulfo-naphth-1-yl | dito | Chlor | Vinyl | braun (453) |
| 79 | 4-(4',7'-Disulfo-naphth-1'-yl)-azo-6-sulfo-naphth-1-yl | dito | Chlor | ß-Chlorethyl | braun (451) |
| 80 | 4-(2',5'-Disulfo-phenyl)-azo-6-sulfo-naphth-1-yl | dito | Chlor | ß-Chlorethyl | braun (457) |
| 81 | dito | 8-Sulfo-naphth-4,1-ylen-1-amino | Chlor | ß-Chlorethyl | braun (455) |

| Bsp. | Azofarbstoff der Formel (A) | | | | Farbton |
|---|---|---|---|---|---|
| | Rest D | Rest -K-NH- | Rest X | Rest Y | |
| 82 | 4,8-Disulfo-naphth-2-yl | 3-Acetylamino-phen-4,1-ylen-1-amino | Chlor | Vinyl | gelb (382) |
| 83 | 5,7-Disulfo-naphth-2-yl | dito | Chlor | Vinyl | gelb (388) |
| 84 | dito | 3-Ureido-phen-4,1-ylen-1-amino | Chlor | Vinyl | gelb (384) |
| 85 | 4,8-Disulfo-naphth-2-yl | dito | Chlor | Vinyl | gelb (385) |
| 86 | 4,6,8-Trisulfo-naphth-2-yl | dito | Fluor | Vinyl | gelb (418) |
| 87 | 1,5-Disulfo-naphth-2-yl | 6-Sulfo-8-hydroxy-naphth-7,3-ylen-3-amino | Fluor | Vinyl | orange (482) |
| 88 | 3,6,8-Trisulfo-naphth-2-yl | dito | Fluor | Vinyl | orange (480) |
| 89 | 2,5-Disulfo-4-methoxy-phenyl | dito | Fluor | Vinyl | scharlach (498) |
| 90 | 2-Sulfo-4-methoxy-phenyl | dito | Fluor | Vinyl | scharlach (497) |

| Bsp. | Azofarbstoff der Formel (A) | | | | Farbton |
|---|---|---|---|---|---|
| | Rest D | Rest -K-NH- | Rest X | Rest Y | |
| 91 | 2,5-Disulfo-phenyl | 3,6-Disulfo-8-hydroxy-naphth-1-(4'-aminocarbonyl-phen)-7,1'-ylen-1'-amino | Fluor | Vinyl | blaustichig rot (535) |
| 92 | 2,5-Disulfo-phenyl | 3,6-Disulfo-8-hydroxy-naphth-1-(3'-aminocarbonyl-phen)-7,1'-ylen-1'-amino | Fluor | Vinyl | blaustichig rot (538) |
| 93 | 1-Sulfo-naphth-2-yl | dito | Fluor | Vinyl | blaustichig rot (542) |
| 94 | 4,8-Disulfo-naphth-2-yl | 3-Acetylamino-phen-4,1-ylen-1-amino | Fluor | Vinyl | gelb (384) |
| 95 | 5,7-Disulfo-naphth-2-yl | dito | Fluor | Vinyl | gelb (381) |
| 96 | dito | 3-Ureido-phen-4,1-ylen-1-amino | Fluor | Vinyl | gelb (385) |
| 97 | 4,8-Disulfo-naphth-2-yl | dito | Fluor | Vinyl | gelb (388) |
| 98 | 4-(2',4'-Disulfo-phenyl)-azo-6-sulfo-naphth-1-yl | 8-Sulfo-naphth-4,1-ylen-1-amino | Fluor | Vinyl | braun (435) |

| Bsp. | Azofarbstoff der Formel (A) | | | | Farbton |
|---|---|---|---|---|---|
| | Rest D | Rest -K-NH- | Rest X | Rest Y | |
| 99 | 4-(2',5',7'-Trisulfo-naphth-1'-yl)-azo-6-sulfo-naphth-1-yl | dito | Fluor | Vinyl | braun (451) |
| 100 | 4-(2',4'-Disulfo-phenyl)-azo-6-sulfo-naphth-1-yl | 3-Methyl-phen-4,1-ylen-1-amino | Fluor | Vinyl | braun (449) |
| 101 | 4-(4',8'-Disulfo-naphth-2'-yl)-azo-6-sulfo-naphth-1-yl | dito | Fluor | Vinyl | braun (452) |
| 102 | dito | 8-Sulfo-naphth-4,1-ylen-1-amino | Fluor | Vinyl | braun (458) |
| 103 | 4,8-Disulfo-naphth-2-yl | 3-Acetylamino-phen-4,1-ylen-1-amino | Fluor | Vinyl | gelb (384) |
| 104 | 5,7-Disulfo-naphth-2-yl | dito | Fluor | Vinyl | gelb (381) |
| 105 | dito | 3-Ureido-phen-4,1-ylen-1-amino | Fluor | Vinyl | gelb (385) |
| 106 | 4,8-Disulfo-naphth-2-yl | dito | Fluor | Vinyl | gelb (388) |

| Bsp. | Azofarbstoff der Formel (A) | | | | Farbton |
|---|---|---|---|---|---|
| | Rest D | Rest -K-NH- | Rest X | Rest Y | |
| 107 | 3,6,8-Trisulfo-naphth-2-yl | dito | Fluor | Vinyl | goldgelb (417) |
| 108 | 4-(4',6',8'-Trisulfo-naphth-2'-yl)-azo-7-sulfo-naphth-1-yl | 3-Methyl-phen-4,1-ylen-1-amino | Fluor | Vinyl | braun (452) |
| | | | | | |

Beispiel 109

Zu einer Lösung mit einem pH-Wert von 6 von 42,9 Teilen der Amino-Azoverbindung 5-(2'-Sulfo-5'-amino-phenyl)-azo-1-ethyl-3-sulfomethyl-4-methyl-6-hydroxy-2-on-pyridin in 500 Teilen Eiswasser rührt man

14 Teile Cyanurfluorid ein und führt die Umsetzung bei 0°C und einem pH-Wert von 4 bis 5 durch. Die Umsetzung ist nach etwa 10 Minuten beendet. Man gibt sodann 39 Teile Bis-[γ-(β'-chlorethylsulfonyl)-propyl]-amin-Hydrochlorid hinzu und führt die Umsetzung bei einem pH-Wert von 8 bis 9 und einer Temperatur von 0 bis 5°C durch.

Der erhaltene erfindungsgemäße Azofarbstoff wird in üblicher Weise durch Aussalzen als Alkalimetallsalz (Natriumsalz) isoliert. Er besitzt, in Form der freien Säure geschrieben, die Formel

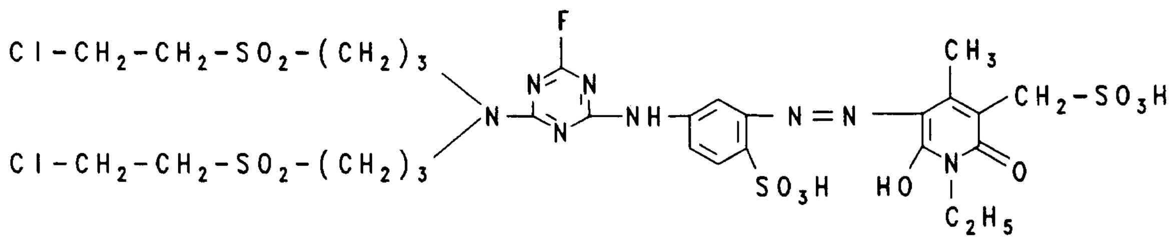

($\lambda_{max}$ = 420 nm)

und färbt die in der Beschreibung genannten Materialien, wie insbesondere Cellulosefasermaterialien, beispielsweise Baumwolle, in brillanten grünstichig gelben Tönen mit guten Echtheitseigenschaften.

Beispiel 110

Eine neutrale Lösung von 21,6 Teilen der Azoverbindung 5-(2'-Sulfo-4'-amino-phenyl)-azo-1-(N-β-sulfoethyl)-4-methyl-6-hydroxy-2-on-pyridin in 300 Teilen Eiswasser werden unter gutem Rühren und unter Einhaltung eines pH-Wertes zwischen 6 und 7 mittels 15 %iger wäßriger Natriumcarbonatlösung mit 9,2 Teilen Cyanurfluorid versetzt. Man rührt noch etwa 15 Minuten bei etwa 0°C nach, gibt sodann 19,5 Teile Bis-[γ-(β'-chlorethylsulfonyl)-propyl]-amin-Hydrochlorid hinzu, erhöht die Temperatur des Ansatzes während etwa 30 Minuten auf 20 bis 25°C und führt die Umsetzung noch etwa vier Stunden bei dieser Temperatur und unter Einhaltung eines pH-Wertes von 6 bis 7 zu Ende. Danach gibt man 8,9 Teile Dinatriumhydrogenphosphat hinzu und isoliert den erfindungsgemäßen Azofarbstoff in üblicher Weise, beispielsweise durch Aussalzen mit Kaliumchlorid.

Der erfindungsgemäße Azofarbstoff besitzt, in Form der freien Säure geschrieben, die Formel

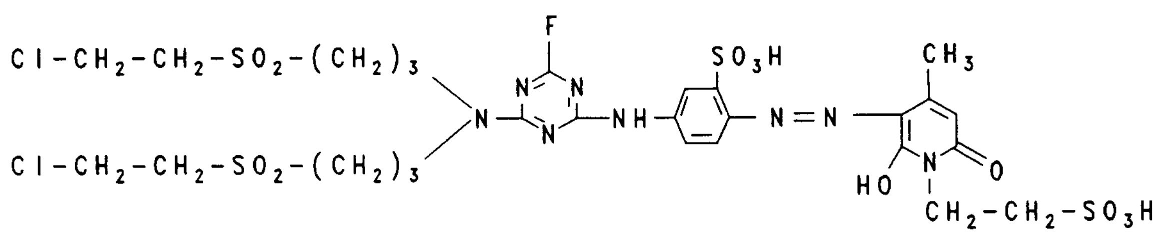

($\lambda_{max}$ = 421 nm)

und färbt die in der Beschreibung genannten Materialien, wie insbesondere Cellulosefasermaterialien, beispielsweise Baumwolle, in brillanten grünstichig gelben Tönen mit guten Echtheitseigenschaften.

Beispiele 111 bis 140

In den nachfolgenden Tabellenbeispielen sind weitere erfindungsgemäße Azofarbstoffe der allgemeinen Formel (B) mit Hilfe der Komponenten dieser Formel (B)

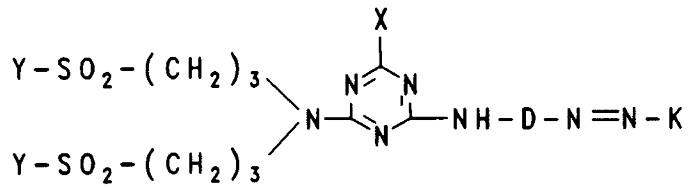

(B)

beschrieben. Sie lassen sich in erfindungsgemäßer Weise, beispielsweise analog einem der obigen Ausführungsbeispiele, unter Einsatz der aus dem jeweiligen Tabellenbeispiel in Verbindung mit der allgemeinen Formel (B) ersichtlichen Komponenten (wie der Diaminoverbindung der Formel $H_2N\text{-}D\text{-}NH_2$ , Chlortriazin oder Fluortriazin, einer Aminoverbindung entsprechend der allgemeinen Formel (22) und der Kupplungskomponente H-K) herstellen. Sie besitzen sehr gute faserreaktive Farbstoffeigenschaften und färben die in der Beschreibung genannten Materialien, insbesondere Cellulosefasermaterialien, wie Baumwolle, in dem in dem jeweiligen Tabellenbeispiel (hier für Baumwolle) angegebenen Farbton in hoher Farbstärke und mit guten Echtheiten.

| Bsp. | Azofarbstoff der Formel (A) | | | | Farbton |
| --- | --- | --- | --- | --- | --- |
| | Rest Y | Rest X | Rest -D- | Rest K | |
| 111 | ß-Chlorethyl | Fluor | 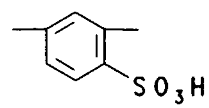 | 1-(N-ß-Sulfoethyl)-4-methyl-6-hydroxy-pyrid-2-on-5-yl | gelb (413) |
| 112 | ß-Chlorethyl | Fluor | 2,5-Disulfo-1,4-phenylen | dito | gelb (426) |
| 113 | ß-Chlorethyl | Fluor | 4,6-Disulfo-1,3-phenylen | dito | gelb (427) |
| 114 | Vinyl | Fluor | 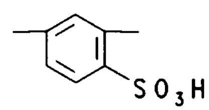 | 1,4-Dimethyl-3-sulfo-6-hydroxy-pyrid-2-on-5-yl | gelb (415) |
| 115 | Vinyl | Fluor | dito | 1-Ethyl-3-aminocarbonyl-4-methyl-6-hydroxy-pyrid-2-on-5-yl | gelb (422) |

| Bsp. | Azofarbstoff der Formel (A) | | | | Farbton |
|---|---|---|---|---|---|
| | Rest Y | Rest X | Rest -D- | Rest K | |
| 116 | ß-Chlorethyl | Fluor | 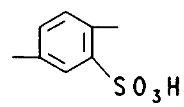 | 1-(N-ß-Sulfoethyl)-4-methyl-6-hydroxy-pyrid-2-on-5-yl | gelb (424) |
| 117 | ß-Chlorethyl | Fluor | 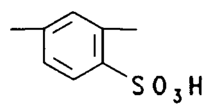 | 5,7-Disulfo-2-amino-naphth-1-yl | orange (461) |
| 118 | Vinyl | Chlor | dito | dito | orange (459) |
| 119 | ß-Chlorethyl | Fluor | 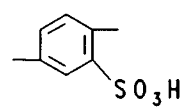 | dito | orange (479) |
| 120 | ß-Chlorethyl | Fluor | 2,5-Disulfo-1,4-phenylen | dito | orange (488) |

| Bsp. | Azofarbstoff der Formel (A) | | | | Farbton |
|---|---|---|---|---|---|
| | Rest Y | Rest X | Rest -D- | Rest K | |
| 121 | ß-Chlorethyl | Chlor | 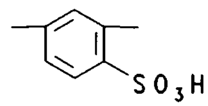 | 1-(N-ß-Sulfoethyl)-4-methyl-6-hydroxy-pyrid-2-on-5-yl | gelb (415) |
| 122 | ß-Chlorethyl | Chlor | 2,5-Disulfo-1,4-phenylen | dito | gelb (425) |
| 123 | ß-Chlorethyl | Chlor | 4,6-Disulfo-1,3-phenylen | dito | gelb (427) |
| 124 | Vinyl | Chlor | 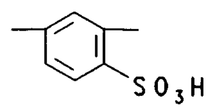 | 1,4-Dimethyl-3-sulfo-6-hydroxy-pyrid-2-on-5-yl | gelb (418) |
| 125 | Vinyl | Chlor | dito | 1-Ethyl-3-aminocarbonyl-4-methyl-6-hydroxy-pyrid-2-on-5-yl | gelb (422) |
| 126 | ß-Chlorethyl | Chlor | 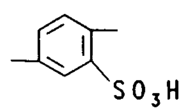 | 1-(N-ß-Sulfoethyl)-4-methyl-6-hydroxy-pyrid-2-on-5-yl | gelb (423) |

| Bsp. | Azofarbstoff der Formel (A) | | | | Farbton |
|---|---|---|---|---|---|
| | Rest Y | Rest X | Rest -D- | Rest K | |
| 127 | ß-Chlorethyl | Chlor | 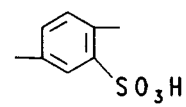 | 5,7-Disulfo-2-amino-naphth-1-yl | orange (481) |
| 128 | ß-Chlorethyl | Chlor | 2,5-Disulfo-1,4-phenylen | dito | orange (487) |
| 129 | ß-Chlorethyl | Chlor | 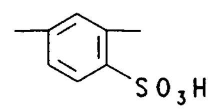 | 1-Ethyl-3-sulfomethyl-4-methyl-6-hydroxy-pyrid-2-on-5-yl | gelb (419) |
| 130 | ß-Chlorethyl | Fluor | 4,6-Disulfo-1,3-phenylen | 1-Ethyl-3-aminocarbonyl-4-methyl-6-hydroxy-pyrid-2-on-5-yl | gelb (437) |
| 131 | Vinyl | Chlor | dito | dito | gelb (436) |
| 132 | ß-Chlorethyl | Fluor | 2,5-Disulfo-1,4-phenylen | dito | gelb (439) |
| 133 | ß-Chlorethyl | Chlor | dito | dito | gelb (437) |

| Bsp. | Azofarbstoff der Formel (A) | | | | Farbton |
|---|---|---|---|---|---|
| | Rest Y | Rest X | Rest -D- | Rest K | |
| 134 | ß-Chlorethyl | Fluor | 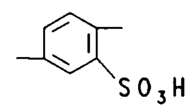 | 1-Ethyl-3-sulfomethyl-4-methyl-6-hydroxy-pyrid-2-5-yl | gelb (433) |
| 135 | ß-Chlorethyl | Chlor | dito | dito | gelb (429) |
| 136 | ß-Chlorethyl | Fluor | dito | 1-{2'-Bis-[γ-(ß'-chlorethylsulfonyl)-propyl]-amino-4'-fluor-1',3',5'-triazin-6'-yl}-amino-3,6-disulfo-8-hydroxy-naphth-7-yl | blaustichig rot (537) |
| 137 | ß-Chlorethyl | Chlor | dito | 1-{2'-Bis-[γ(ß'-chlorethylsulfonyl)-propyl]-amino-4'-chlor-1',3',5'-triazin-6'-yl}-amino-3,6-disulfo-8-hydroxy-naphth-7-yl | blaustichig rot (537) |

| Bsp. | Azofarbstoff der Formel (A) | | | | Farbton |
|---|---|---|---|---|---|
| | Rest Y | Rest X | Rest -D- | Rest K | |
| 138 | ß-Chlorethyl | Fluor | 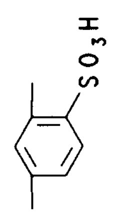 | 1-{2'-Bis-[γ-(ß'-chlorethylsulfonyl)-propyl]-amino-4'-fluor-1',3',5'-triazin-6'-yl}-amino-3,6-disulfo-8-hydroxy-naphth-7-yl | blaustichig rot (537) |
| 139 | ß-Chlorethyl | Chlor | dito | 1-{2'-Bis-[γ-(ß'-chlorethylsulfonyl)-propyl]-amino-4'-chlor-1',3',5'-triazin-6'-yl}-amino-3,6-disulfo-8-hydroxy-naphth-7-yl | blaustichig rot (537) |
| 140 | ß-Chlorethyl | Fluor | dito | 1-{2'-Bis-[γ-(ß'-chlorethylsulfonyl)-propyl]-amino-4'-fluor-1',3',5'-triazin-6'-yl}-amino-4,6-disulfo-8-hydroxy-naphth-7-yl | blaustichig rot (539) |

## Patentansprüche

**1.** Mono-, Dis- und Trisazofarbstoffe der allgemeinen Formeln (1a), (1b), (1c), (1d) und (1e)

$D^1 - N = N - (E - N = N)_v - K^2 - Z$ (1a)

$Z - D^2 - N = N - (E - N = N)_v - K^1$ (1b)

$Z - D^2 - N = N - (E - N = N)_v - K^2 - Z$ (1c)

$D^1 - N = N - K^o - N = N - D^2 - Z$ (1d)

$Z - D^2 - N = N - K^o - N = N - D^2 - Z$ (1e)

in welchen bedeuten:

Z ist eine Gruppe der allgemeinen Formel (2)

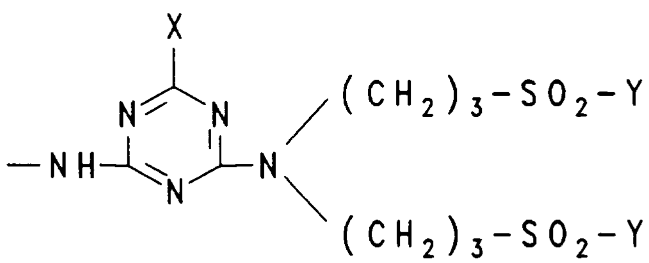

(2)

in welcher

X Chlor oder Fluor ist und

Y Vinyl ist oder Ethyl bedeutet, das in β-Stellung durch einen unter Einwirkung von Alkali bei Bildung der Vinylgruppe eliminierbaren Substituenten substituiert ist;

$D^1$ ist ein Rest der nachstehend angegebenen und definierten allgemeinen Formel (3a) oder (3b);

$Z\text{-}D^2\text{-}$ ist ein Rest der nachstehend angegeben und definierten allgemeinen Formel (4a) oder (4b);

E ist ein Rest der nachstehend angegeben und definierten allgemeinen Formel (5a), (5b) oder (5c);

v ist die Zahl Null oder 1;

$K^1$ ist eine Gruppe der nachstehend angegebenen und definierten allgemeinen Formel (6a), (6b), (6c), (6d), (6e), (6f), (6g) oder (6h);

$-K^2\text{-}Z$ ist eine Gruppe der nachstehend angegebenen und definierten allgemeinen Formel (7a), (7b), (7c), (7d), (7e), (7f), (7g), (7h) oder (7i);

$K^o$ ist der Rest einer bivalenten Kupplungskomponente;

ausgenommen hiervon Farbstoffe der allgemeinen Formel (1a), in welcher gleichzeitig X gleich Chlor, v die Zahl Null, $D^1$ ein Rest der Formel (3b), und der Rest $-K^2\text{-}Z$ gleich ein Rest der allgemeinen Formel (7c) ist, sowie Farbstoffe der allgemeinen Formel (1b), in welcher gleichzeitig v die Zahl Null, $Z\text{-}D^2\text{-}$ ein Rest der allgemeinen Formel (4a) und $K^1$ ein Rest der allgemeinen Formel (6d) mit $R^H$ gleich Wasserstoff oder Sulfo sowie $P^1$, $P^2$, T und $P^9$ der angegebenen Bedeutungen ist;

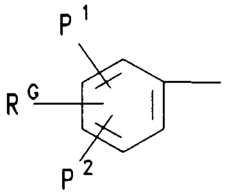

(3a)

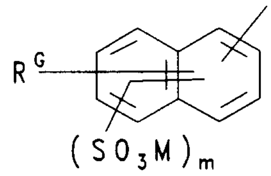

(3b)

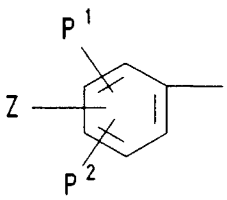

(4a)

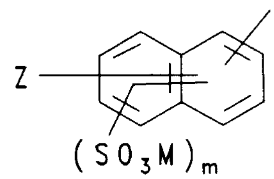

(4b)

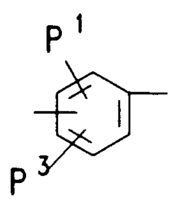

(5a)

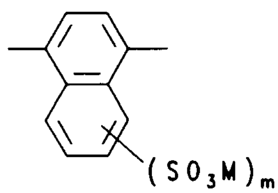

(5b)

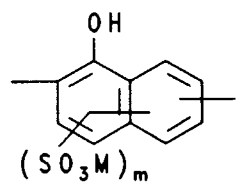

(5c)

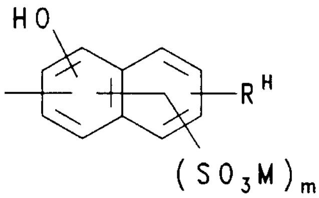

(6a)

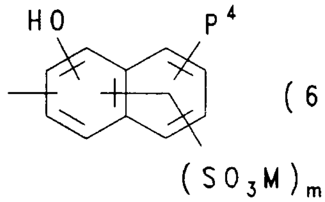

(6b)

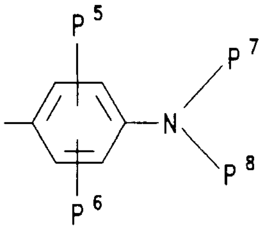

(6c)

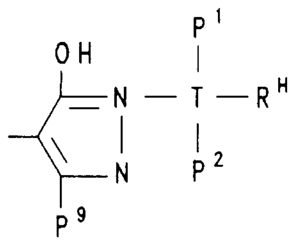

(6d)

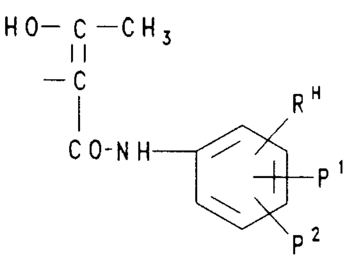

(6e)

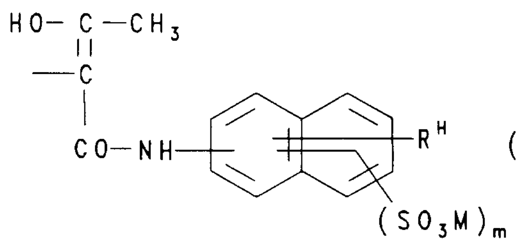

(6f)

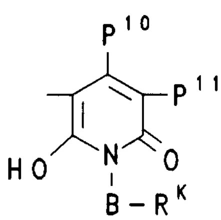

(6g)

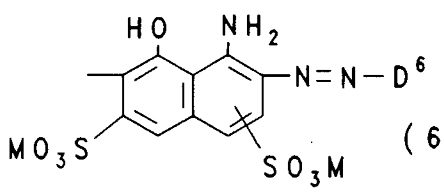

(6h)

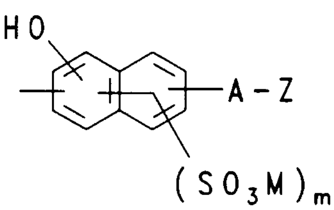

(7a)

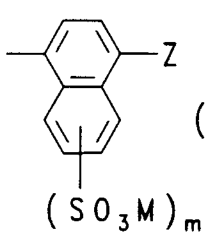

(7b)

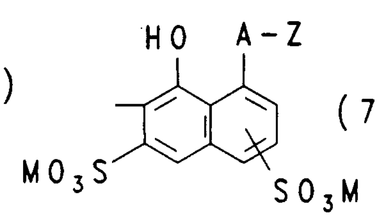

(7c)

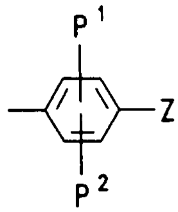

(7d)

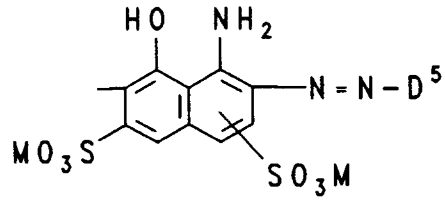

(7e)

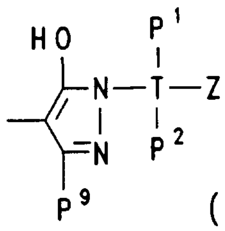

(7f)

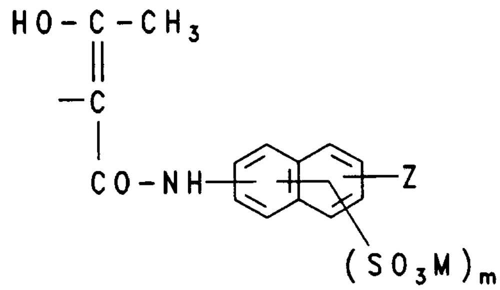

(7g)

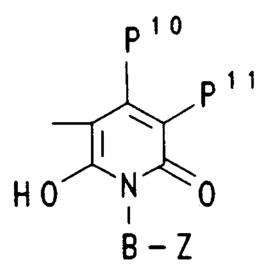

(7h)

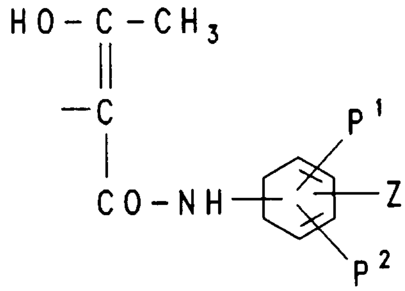

(7i)

worin bedeuten:

M ist Wasserstoff oder ein Alkalimetall;

$R^G$ ist Wasserstoff oder Sulfo oder eine Gruppe der allgemeinen Formel $D^1$ -N = N- , in welcher $D^1$ ein Rest der oben angegebenen allgemeinen Formel (3a) oder (3b) ist, worin $P^1$ und $P^2$ eine der nachstehend angegebenen Bedeutungen besitzen und $R^G$ hier Wasserstoff oder Sulfo bedeutet;

$P^1$ ist Wasserstoff, Methyl, Ethyl, Methoxy, Ethoxy, Alkanoyl von 2 bis 5 C-Atomen, Cyano, Sulfo, Carboxy, Nitro, Phenylamino, Phenoxy, Sulfophenylamino, Alkoxycarbonyl von 2 bis 5 C-Atomen, Sulfamoyl, Carbamoyl, N-($C_1$-$C_4$-Alkyl)-carbamoyl, Fluor, Chlor, Brom oder Trifluormethyl;

$P^2$ ist Wasserstoff, Methyl, Ethyl, Methoxy, Ethoxy, Cyano, Carboxy, Sulfo, Chlor, Alkanoylamino von 2 bis 5 C-Atomen, Alkoxycarbonyl von 2 bis 5 C-Atomen, Carbamoyl, N-($C_1$-$C_4$-Alkyl)-sulfamoyl, N-Sulfophenyl-amidocarbonyl, N-Phenyl-amidocarbonyl, Alkylsulfonyl von 1 bis 4 C-Atomen, Phenylsulfonyl oder Phenoxy;

m steht für die Zahl Null, 1 oder 2 (wobei diese Gruppe im Falle von m gleich Null ein Wasserstoffatom bedeutet);

$P^3$ ist Wasserstoff, Alkyl von 1 bis 4 C-Atomen, Alkoxy von 1 bis 4 C-Atomen, Chlor, Amino, Alkanoylamino von 2 bis 5 C-Atomen, Benzoylamino, Ureido, Phenylureido, Alkylureido mit 1 bis 4 C-Atomen im Alkylrest, Phenylsulfonyl oder Alkylsulfonyl von 1 bis 4 C-Atomen;

$R^H$ ist Wasserstoff oder Sulfo oder eine Gruppe der allgemeinen Formel -N = N-$K^1$ , in welcher $K^1$ eine Gruppe der oben angegebenen allgemeinen Formel (6c), (6d), (6e) oder (6h) ist, in welchen $R^H$ hier für Wasserstoff oder Sulfo steht und die anderen Formelglieder eine der

nachstehenden oder obengenannten Bedeutungen besitzen;

$R^K$ ist Wasserstoff, Sulfo oder Carboxy;

$P^4$ ist Phenylureido, das im Phenylrest durch Substituenten aus der Gruppe Chlor, Methyl, Methoxy, Sulfo und Carboxy substituiert sein kann, oder ist Alkanoylamino von 2 bis 5 C-Atomen oder Benzoylamino, das im Benzolrest durch Substituenten aus der Gruppe Chlor, Methyl, Methoxy, Nitro, Sulfo und Carboxy substituiert sein kann;

$P^5$ ist Wasserstoff, Alkyl von 1 bis 4 C-Atomen, Alkoxy von 1 bis 4 C-Atomen, Brom, Chlor oder Alkanoylamino von 2 bis 7 C-Atomen;

$P^6$ ist Alkyl von 1 bis 4 C-Atomen, Alkoxy von 1 bis 4 C-Atomen, Chlor, Alkanoylamino von 2 bis 7 C-Atomen, Ureido oder Phenylureido;

$P^7$ ist Wasserstofff oder Alkyl von 1 bis 4 C-Atomen, das durch Hydroxy, Cyano, Carboxy, Sulfo, Sulfato, Methoxycarbonyl, Ethoxycarbonyl oder Acetoxy substituiert sein kann;

$P^8$ ist Alkyl von 1 bis 4 C-Atomen, das durch Hydroxy, Cyano, Carboxy, Sulfo, Sulfato, Methoxycarbonyl, Ethoxycarbonyl oder Acetoxy substituiert sein kann, oder ist Benzyl oder Phenyl oder durch Alkyl von 1 bis 4 C-Atomen, Alkoxy von 1 bis 4 C-Atomen, Chlor und/oder Sulfo substituiertes Phenyl;

$P^9$ ist Wasserstoff, Alkyl von 1 bis 4 C-Atomen, Cyano, Carboxy, Carbalkoxy von 2 bis 5 C-Atomen, Carbamoyl oder Phenyl;

T steht für einen Benzol- oder Naphthalinring;

$P^{10}$ ist Wasserstoff oder Alkyl von 1 bis 4 C-Atomen oder durch Alkoxy von 1 bis 4 C-Atomen oder Cyano substituiertes Alkyl von 1 bis 4 C-Atomen oder ist Phenyl;

$P^{11}$ ist Wasserstoff, Chlor, Brom, Sulfo, Carbamoyl, Methylsulfonyl, Phenylsulfonyl, Cyano oder Sulfoalkyl von 1 bis 4 C-Atomen;

A ist eine kovalente Bindung oder ein Rest der Formel -NH-CO-phenylen- oder -NH-CO-NH-phenylen- oder -NH-phenylen-;

B ist Alkylen von 1 bis 4 C-Atomen, das durch Hydroxy, Sulfato, Sulfo, Carboxy, Phosphato oder Acetyloxy substituiert sein kann, oder ist Methylenphenylen, Ethylenphenylen, Phenylenmethylen, Phenylenethylen oder Phenylen oder im Benzolrest durch Fluor, Chlor, Brom, Methyl, Methoxy, Cyano, Sulfo, Carboxy, Acetyl, Nitro, Carbamoyl und/oder Sulfamoyl substituiertes Methylenphenylen, Ethylenphenylen oder Phenylen;

$D^5$ ist eine Gruppe der oben genannten und definierten allgemeinen Formel (4a) oder (4b);

$D^6$ ist ein Rest der oben angegebenen allgemeinen Formel (3a) oder (3b), in welchen $P^1$ und $P^2$ eine der obengenannten Bedeutungen besitzen und $R^G$ hier Wasserstoff oder Sulfo bedeutet;

in den Formeln (6a), (6b) und (7a) steht die freie Bindung, die zur Azogruppe führt, in ortho-Stellung zur Hydroxygruppe an den aromatischen Kern gebunden, und in den Formeln (6a) und (6f) steht $R^H$, falls $R^H$ eine Gruppe $-N=N-K^1$ bedeutet, sowie in der Formel (7a) der Rest -A-Z in $\beta$-Stellung des jeweiligen anderen aromatischen Kerns des Naphthalinrestes gebunden;

in Formel (5c) steht die freie Bindung, die zm Rest $-N=N-K^1$ oder $-N=N-K^2-Z$ führt, in 2- oder 3-Stellung an den 8-Hydroxy-naphthyl-Rest gebunden;

in Formel (7b) steht die eine Gruppe $-SO_3M$ in meta- oder para-Stellung zur Gruppe -A-Z gebunden.

**2.** Verfahren zur Herstellung von Farbstoffen der allgemeinen Formel (1) von Anspruch 1, dadurch gekennzeichnet, daß man für den jeweiligen Farbstoff typische Vorprodukte, von denen mindestens eines eine Gruppe der allgemeinen Formel (2) enthält, miteinander umsetzt, oder daß man eine Halogen-triazin-Verbindung der allgemeinen Formel (21)

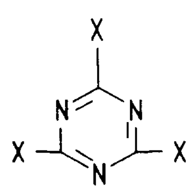

(21)

in welcher X eine der obengenannten Bedeutungen besitzt, mit einer aminogruppenhaltigen Ausgangsverbindung der allgemeinen Formel (20a), (20b), (20c), (20d) oder (20e)

$D^1 - N = N - (E - N = N)_v - K^2 - NH_2$ (20a)

$H_2N - D^2 - N = N - (E - N = N)_v - K^1$ (20b)

$H_2N - D^2 - N = N - (E - N = N)_v - K^2 - NH_2$ (20c)

$D^1 - N = N - K^o - N = N - D^2 - NH_2$ (20d)

$H_2N - D^2 - N = N - K^o - N = N - D^2 - NH_2$ (20e)

in welchen $D^1$, $D^2$, E, v, $K^1$, $K^2$ und $K^o$ die obengenannten Bedeutungen haben, und mit einer Aminoverbindung der allgemeinen Formel (22)

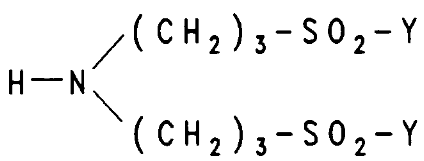

(22)

in welcher Y eine der obengenannten Bedeutungen hat, in beliebiger Reihenfolge miteinander umsetzt.

3. Verwendung eines Farbstoffes von Anspruch 1 oder eines nach Anspruch 2 hergestellten Farbstoffes zum Färben (einschließlich Bedrucken) von hydroxy- und/oder carbonamidgruppenhaltigem Material, insbesondere Fasermaterial.

4. Verfahren zum Färben (einschließlich Bedrucken) von hydroxy- und/oder carbonamidgruppenhaltigem Material, insbesondere Fasermaterial, bei welchem man einen Farbstoff auf das Material aufbringt und den Farbstoff auf dem Material mittels Wärme oder mit Hilfe eines alkalisch wirkenden Mittels oder mittels beider Maßnahmen fixiert, dadurch gekennzeichnet, daß man als Farbstoff einen Farbstoff von Anspruch 1 oder einen nach Anspruch 2 hergestellten Farbstoff einsetzt.

Europäisches Patentamt

# EUROPÄISCHER RECHERCHENBERICHT

Nummer der Anmeldung
EP 94 10 6831

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y | FR-A-2 346 418 (CASSELLA FARBWERKE MAINKUR AG.)<br>* Beispiel 1; Beispiel 3, Seite 37, Zeile 28; Anspruch 27 * | 1-4 | C09B62/507<br>C09B62/08 |
| D | & GB-A-1 576 237 (CASSELLA AG.)<br>--- | | |
| Y,D | EP-A-0 070 808 (CIBA-GEIGY AG.)<br>* Seite 13, Zeile 15 - Zeile 24; Ansprüche; Beispiele 157,165 *<br>--- | 1-4 | |
| A | EP-A-0 298 041 (CIBA-GEIGY AG.)<br>* Ansprüche; Beispiel 56 *<br>----- | 1-4 | |
| | | | RECHERCHIERTE SACHGEBIETE (Int.Cl.5) |
| | | | C09B |

Der vorliegende Recherchenbericht wurde für alle Patentansprüche erstellt

| Recherchenort | Abschlußdatum der Recherche | Prüfer |
|---|---|---|
| DEN HAAG | 29. August 1994 | Ginoux, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)